# EUROPEAN PATENT SPECIFICATION

(11) **EP 4 171 940 B1**
(45) Date of publication and mention of the grant of the patent: **11.11.2026**
(21) Application number: 21742506.5
(22) Date of filing: 23.06.2021
(51) Int. Cl.: B31F 1/07, G06V 20/80

(54) **ENGRAVED MODULATED PIECE**
EINGRAVIERTES MODULIERTES STÜCK
PIÈCE MODULÉE GRAVÉE

(30) Priority: 24.06.2020 EP 20182078
(43) Date of publication of application: 03.05.2023
(73) Proprietor: Boegli-Gravures S.A., 2074 Marin-Epagnier (CH)
(72) Inventor: BOEGLI, Charles, 2074 Marin-Epagnier (CH); DROZ, Alain, 2075 Thielle (CH); DUMITRU, Gabriel, 5415 Nussbaumen (CH); LUSTENBERGER, Felix, 2074 Marin-Epagnier (CH)
(74) Representative: Weihs, Bruno Konrad
(86) International application number: PCT/IB2021/055543
(87) International publication number: WO 2021/260574

(56) References cited:
- WO-A1-2016/077934
- WO-A1-2020/002970
- US-A1- 2004 151 796
- US-A1- 2005 015 370
- US-A1- 2011 223 381
- US-A1- 2017 109 857

## Description

### Field of the invention

The invention relates to an engraved solid piece for carrying data comprising specific information on a surface of the engraved solid piece. The invention further relates to a method for manufacturing such an engraved solid piece, and to a method for configuring a plurality of block structures of modulated features and/or base features intended to be engraved on the surface of the solid piece.

### Background Art

European publication EP3437849 to the present applicant discloses an embossing tool for embossing a combined embossing pattern into a packaging material, the combined embossing pattern including decoratively embossed structures and at least one embossed code. The embossing tool includes a patrix and a matrix embossing device for cooperating with each other, embossing structures of the patrix and matrix embossing device formed to produce the combined embossing pattern into the packaging material in an embossing gap. The embossing structures of the patrix and the matrix embossing device further include first embossing structures intended for making the at least one embossed code, which are inverse congruent patrix and matrix embossing structures having a polyhedral shape. The decoratively embossed structures and the at least one embossed code produced by the embossing structures are arranged such that the at least one embossed code has a reduced visibility to the human eye. In order to achieve this, embossing structures intended for making the decorative embossed structures are adjacent to code areas comprising embossing structures for making the embossed code. Decorative areas may alternate successively with code areas. Different codes may also be overlaid by each other by using different structures to emboss the codes. For example, in case an embossed cell of a first code lies at the same location as an embossed cell of a second code, the cells can be embossed as full square cells, and in case only an embossed cell of the second code is present, the cell can be embossed with an empty square. Moreover, in case only an embossed cell of the first code is present, the cell can be embossed with a full circle. Hence, it is possible to recover two overlaid codes by identifying over a delimited surface all embossed cells belonging to the first code on one hand, and all embossed cells that belong to the second code on the other hand, even when such embossed cells are used for representing the first code and the second code at the same time. In a similar manner, it is possible to overlap a surface area of an embossed code with a surface area of the decorative pattern. Shapes of embossed cells allow determining whether an embossed cell is used to define the embossed code, the decorative pattern, or both. It is only the distribution of the embossed cells that belong to the embossed code, i.e., the distribution thereof over a surface of the embossed material, allows recovering the embossed code.

International publication WO2020/002970 to the present applicant discloses an embossing method allowing modulating individual features and arranging them in a grid, whereby the modulated individual features enable to obtain surface-oriented visible optical effects with an aesthetic purpose. In this manner, the method described allows creating brilliant and high-quality results in foil material. This publication makes no mention of encoding and/or hiding information by any means, and more particularly by means of the modulated individual features. Furthermore, it does not require any particular technical means to reveal the aimed visible optical effects in light reflected from a foil material embossed according to the method of WO2020/002970.

US 2004/0151796, US 2011/0223381 A1, US 2005/0015370 A1 and WO 2016/077934 A1, are further relevant prior art documents.

The present invention aims to propose an alternative for carrying data comprising specific information on a surface of an engraved solid piece, in which the carried data is intermingled with an aesthetic ensemble on the surface but rendered imperceptible to the human eye.

### Summary of Invention

In a first aspect, the invention provides an engraved solid piece carrying data comprising specific information on a surface of the engraved solid piece. The surface is covered by a plurality of block structures, comprising at least a first block structure. Each block structure is a spatially restricted collection of modulated features and base features, which are spread over the surface of the engraved solid piece. Each modulated feature and each base feature has respectively a three-dimensional modulated-feature profile and a three-dimensional base-feature profile. Each of the modulated-feature profiles is the result of applying a corresponding modulation to one of the three-dimensional base-feature profiles, according to a specific corresponding information. Each modulated feature further is a symbol, which is a transcription of a character of an alphabet. The alphabet is a collection of characters, which are distinct objects of well-defined elementary data. Each of the base features is an engraved elementary three-dimensional topographical element of the surface. Each of the modulated features is an engraved three-dimensional topographical element of the surface.

At least a part of the data is transcribed by a code-block structure of modulated features, the code-block structure thereby constituting at least a part of a block structure corresponding to the at least one part of the data. The modulated features of the first block structure are arranged according to a first ordered map, the first ordered map comprising at least a first finite ordered set of first positions of the modulated features of a first code-block structure on the surface, the first block structure corresponding to a first part of the data, and the first ordered map further is configured to arrange the modulated features of the first block structure to constitute an aesthetic ensemble on the surface and render the respective symbols corresponding to the modulated features of the first code-block structure imperceptible to the human eye, but retrievable by means of a software-driven image-sensor/processor combination.

In a preferred embodiment, the engraved solid piece further comprises on its surface an at least one second block structure being a second spatially restricted collection of exclusively a plurality of at least one of the base features. The base features of the at least one second block structure are arranged on the solid surface according to a second map, the second map being a second finite set of positions of the base features on the surface, the second map further enabling its base features to be arranged to constitute an aesthetic ensemble on the surface.

In a further preferred embodiment the engraved solid piece:
- has a cylindrical symmetry, and
- is configured as a tool for a transfer of the modulated features and/or the base features into a substrate,
the transfer being any one of the following:
shaping, printing, molding, crafting, pressing, and embossing onto or into the substrate, of the modulated features and/or the base features.
In a further preferred embodiment, the engraved solid piece is
   - configured to be used as a forming tool, for a transfer of the modulated features and/or the base features into a substrate,
the transfer being any one of the following:
   printing, molding, crafting, pressing, and embossing onto the substrate, of the engraved modulated features and/or the engraved base features.
   in a further preferred embodiment, the engraved solid piece further comprises a plurality of first ordered maps and second maps, wherein the plurality of first ordered maps and second maps are arranged along at least a regular grid.

In a further preferred embodiment, the engraved solid piece further comprises a plurality of first ordered maps and second maps, wherein the plurality of first ordered maps and second maps are arranged along at least a randomized grid.

In a further preferred embodiment, the engraved solid piece further comprises a plurality of first ordered maps and second maps, wherein the plurality of first maps and second maps are
- configured to carry first parts of data and constitute at least one aesthetic ensemble; and
- arranged such that the positions of the modulated features of the carried first parts of data is imperceptible to the human eye, but retrievable only by means of a software-driven image-sensor/processor combination.

In a further preferred embodiment, the engraved solid piece further comprises at least a further first ordered map, the further first ordered map being a further finite set of further positions of the modulated features on the surface, each further position being a result of a determined translation of a corresponding first position of the first ordered map, the further first ordered map being configured to define a further first block structure that is non-overlapping with the first block structure defined by the first ordered map, and either
- adjacent to the first block structure;
- separated from the first block structure by a determined distance; or
- in case there are a plurality of further first ordered maps, separated from each other in a regular manner in 2 dimensions.

In a further preferred embodiment, the engraved solid piece further carries a third part of data on the surface corresponding to a third map. The third map is a third finite set of positions of the modulated features on the surface, the third map being configured to define a third block structure that is non-overlapping with the first block structure defined by the first map, and any one of the following
- adjacent to the first block structure;
- separated from the first block structure by a determined distance; or
- in case there are a plurality of third maps, separated from each other and from the first block structure.

In a second aspect, the invention provides a method for manufacturing an engraved solid piece configured for carrying data comprising specific information, on a surface of the engraved solid piece. The method comprises
engraving (S1) on the surface a plurality of block structures (BS), comprising at least a first block structure, whereby
   - each block structure is a spatially-restricted collection of modulated features and base features, which are spread over the surface of the engraved solid piece,
   - each modulated feature and each base feature having respectively a three-dimensional modulated-feature profile and a three-dimensional base-feature profile,
   - each of the modulated-feature profiles being the result of applying a corresponding modulation to one of the three-dimensional base-feature profiles, according to a specific corresponding information,
   - each modulated feature further being a symbol, which is a transcription of a character of an alphabet,
   - the alphabet being a set of characters, which are distinct objects of a well-defined elementary data,
   - each of the base features being an engraved elementary three-dimensional topographical element of the surface,
   - each of the modulated features being an engraved three-dimensional topographical element of the surface,
   - at least a part of the data being transcribed by a code-block structure of modulated features, the code-block structure thereby constituting at least a part of a block structure corresponding to the at least one part of the data,
whereby the modulated features of the first block structure are arranged according to a first ordered map, the first ordered map comprising at least a first finite ordered set of first positions of the modulated features of a first code-block structure on the surface, the first block structure corresponding to a first part of the data, and
whereby the first ordered map further is configured to arrange the modulated features of the first block structure to constitute an aesthetic ensemble on the surface and render the respective symbols corresponding to the modulated features of the first code-block structure imperceptible to the human eye, but retrievable by means of a software-driven image-sensor/processor combination.

In a further preferred embodiment, the step of engraving on the surface a plurality of block structures is executed by any one of the following:
- (precision) milling,
- laser ablation,
- chemical engraving,
- plasma etching, and
- stamping.

In a third aspect, the invention provides a method for configuring a plurality of block structures of modulated features and base features intended to be engraved on a surface of a solid piece,
whereby
each modulated feature and each base feature has respectively a three-dimensional modulated-feature profile and a three-dimensional base-feature profile, which enables to engrave each of the modulated features and each of the base features,
each block structure comprises a corresponding code-block structure of transcribed data, and
each block structure is a collection of modulated features and base features, configured to be spread over a spatially restricted part of the surface.

The method comprises:
- creating each of the modulated features profiles by applying a corresponding modulation by means of a modulator feature profile to one of the base features profiles, according to a symbol, which is a transcription of a character of an alphabet, the alphabet being a collection of characters, which are distinct objects of well-defined elementary data,
- transcribing at least a first part of the data for a first code-block structure by means of the modulated-feature profiles,
- arranging the modulated features corresponding to the first code-block structure in at least a first block structure of the plurality of block structures, according to a first ordered map, the first ordered map being a first finite set of positions of the modulated features of the first code-block structure, and
- configuring the modulated features in the first ordered map to constitute an aesthetic ensemble on the surface and render the respective symbols corresponding to the modulated features of the first code-block structure imperceptible to the human eye for the intended engraving, but retrievable only by means of a software-driven image-sensor/processor combination.

In a fourth aspect, the invention provides a method for authenticating a surface-structured product, by means of linked information associated to an identifier which is associated with the surface-structured product, the identifier being embedded into a code-block structure of a block structure of a surface of the product. The method comprises the steps of:
- capturing an image from the block structure of the product with a camera that is associated with a first data-processing device;
- analyzing the captured image at the first data-processing device to extract the identifier by a first algorithm;
- transmitting the identifier to a second data-processing device;
- querying a database with the second data-processing device to access the linked information stored in the database, the linked information being associated with the identifier; and
- sending the linked information to the first data-processing device.

In a further preferred embodiment, the method for authenticating the product further comprises the steps of:
- after the step of querying, verifying if the linked information indicates that the surface-structured product is prone to counterfeiting, and requesting by the second data-processing device data of the image from the first data-processing device; and
- analyzing the captured image at the second data-processing device to extract additional information from the code-block structure with a second algorithm of forensic examination of the code-block structure, that is different from the first algorithm.

In a further preferred embodiment, the method for authenticating the product wherein:
- the verifying is executed at at least one of the first and second data-processing device,
- the requesting by the second data-processing device is for a capturing of another image by the camera of the first data-processing device, the another image having an improved image quality as compared to the captured image, and
- the analyzing is performed on the another image.

In a further preferred embodiment, the step of analyzing further comprises:
- filtering the image for removing at least one of artifacts, noise, geometric distortion, and illumination non-uniformity for obtaining a filtered image;
- performing grid extraction to the filtered image, whereby a grid is overlayed over the filtered image to serve as a reference coordinate system;
- detecting a synchronization pattern by using information aligned to the grid;
- detecting at least one symbol based on a position of the synchronization pattern; and
- decoding the identifier from the at least one symbol based on a mapping function.

In a further preferred embodiment, the method for authenticating the product further comprises
- extracting an authentication information associated with the captured image, the authentication information being unique to the captured image; and
- sending the authentication information to the second data-processing device.

One particular advantage of the invention is that it enables a comparatively higher density of information for carrying data, compared for example to the prior art EP3437849 discussed herein above.

### Brief Description of the Drawings

The invention will be understood better through the description of embodiments, and in reference to the drawings, in which
Figure 1 contains graphics used to illustrate the definition of coordinate systems;
Figure 2 contains an illustration of example features according to the invention;
Figure 3 illustrates an example of an ordered map of features along a regular grid according to the invention;
Figure 4 illustrates an example of an ordered map of features along a randomized grid according to the invention;
Figure 5 illustrates a further example of an ordered map features along a regular grid according to the invention;
Figures 6 to 9 illustrate code-block structures selected out of an ordered map of features according to examples of the invention;
Figures 10 and 11 illustrate respectively an example of a base feature and a corresponding modulated feature according to the invention;
Figure 12 schematically explains multiplicative modulation according to examples of the invention;
Figure 13 schematically explains z-offsetting modulation according to an example of the invention;
Figure 14 schematically explains a scaled z-offsetting modulation according to a further example of the invention;
Figure 15 schematically explains an additive modulation according to examples of the invention;
Figure 16 schematically explains an xy-offsetting modulation according to a further example of the invention;
Figure 17 illustrates a part of a surface of a tool or a surface-structured product covered by a plurality of block structures, according to an example of the invention;
Figure 18 illustrates an example synchronized embossing set-up with solid pieces according to the invention;
Figure 19 illustrates an example solid piece in form of a surface-structured product, according to an example embodiment of the invention;
Figure 20 illustrates an example embodiment of an ordered map for a block structure with modulated features and base features, according to the invention;
Figure 21 shows the code-block structure resulting from the ordered map of Figure 20;
Figures 22A-D show four (4) realization examples of embossed foil products;
Figure 23 illustrates an example of a surface-structured product with engraved block structures according to the invention;
Figure 24 illustrates a synchronized embossing set-up with an optional quick-exchange cassette, and an embossed foil product according to an example embodiment of the invention;
Figure 25 illustrates a further synchronized embossing set-up with an even further example of embossed foil product according to an embodiment of invention;
Figure 26 illustrates an example of a set-up for reading out modulated features from block structures embossed in a foil-product according to an embodiment of the invention;
Figure 27 illustrates a further example of a set-up for reading out modulated features according to an embodiment of the invention;
Figure 28 illustrates an example use case of the block structure according to the invention;
Figure 29 illustrates an example use case of the block structure according to the invention;
Figure 30 illustrates an example use case of the block structure according to the invention;
Figure 31 contains a flowchart illustrating a method for manufacturing an engraved solid piece according to an embodiment of the invention;
Figure 32 contains a flowchart illustrating a method for configuring a plurality of block structures of modulated features and base features intended to be engraved on a surface of a solid piece according to an example embodiment of the invention;
Figure 33 illustrates an exemplary schematic and simplified representation of a system for reading, extracting, and matching an identifier or code for the purpose of, e.g., authentication:
Figure 34 shows a schematic representation of a corresponding method that can be performed on the system according to Figure 34;
Figure 35 shows an exemplary flowchart of steps that may be performed as an application of a smartphone can process received image data to extract an identifier or code; and
Figures 36A/B exhibit two microscopic images of a tool surface as a practical example of having base features and modulated features alongside each other.

Same references will be used to designate same or similar features throughout all of the figures.

### Description of Embodiments of the Invention

### Glossary

### With regard to the substrate

- a **feature profile** : a description of a three-dimensional topographical profile meant to be engraved into a surface of a solid piece or to be transferred onto a substrate; the feature profile may be described by a determined function z = *f(x,y)* and has a limited size, typically smaller than 0.5 mm in all three dimensions;
- a **base feature:** an engraved elementary three-dimensional topographical element engraved into the surface of the solid piece. The base feature has a base feature profile;
- a **modulated feature:** an engraved three-dimensional topographical element, whose three-dimensional modulated-feature profile is the result of applying a feature profile by means of an operator, i.e., a modulator, to a base feature profile;
- a **map:** a finite set of positions on the surface of the solid piece or the substrate, determining locations of base features and modulated features;
- a **block structure:** a spatially restricted collection of base features and/or modulated features, which are spread over the surface of the solid piece or the substrate according to an ordered map;
- a **decoration:** a block structure that is precisely employed to carry a visual impression or a haptic response.

### With regard to transfer

- **transfer:** any one of, for example, shaping, printing, molding, crafting, pressing, and embossing onto a substrate, of at least a three-dimensional topographical element formed on a solid piece;
- a **tool:** a material part having base features and/or modulated features on at least one surface, the material being for example metal, ceramics, in bulk or layer form, and meant to transfer its surface structure onto another material;
- a **roller:** a tool characterized by a cylindrical symmetry, and dimensions of, for example, a length <5 m, and a diameter <1 m, profiled with base features and/or modulated features on its lateral surface;
- **patrix/matrix** rollers: a set of synchronized profiled rollers, having inversely-congruent base features and/or modulated features on their respective lateral surfaces;
- **embossing**: the process of transferring the features from at least one roller or from a tool onto a fluid or solid substrate or onto another solid piece.

### With regard to encoding

- a **code-block structure:** a block structure with modulated features, which is precisely employed to represent data comprising specific information;
- a **character:** a distinct object of an alphabet;
- an **alphabet:** a well-defined set of distinct characters, e.g., distinct elementary data;
- a **modulation:** a specific operation transcribing a character into a corresponding three-dimensional feature profile meant to be engraved;
- a **symbol:** a three-dimensional feature profile that is the outcome of a modulation;
- a **symbol array:** an N×M array of symbols, where N and M are integers.

### Detailed description of preferred embodiments of the invention

The patent publications described in the above *Background Art* section disclose the use of a pattern of features for the purpose of satinizing a foil or a paper, and therewith achieving an aesthetic, decorative effect. The pattern may be a regular embossing pattern that is applied to a surface of a solid piece in the intention of embossing the features of the pattern in the foil or paper by means of the solid piece.

For the sake of convenience, in the following we will refer to a *foil product* when designating metal foil, polymer foil, paper, laminated paper or hybrids, cardboard, or other thin-sheet product to be embossed with thicknesses <900 µm.

More generally, in the field of embossing, and for the present invention, we refer to the *map* as a finite set of positions on the surface of the solid piece or the substrate, determining locations of base features and modulated features, i.e., three-dimensional structures, on the surface of the solid piece or substrate. The map may be a basis for placing the features as a block structure onto the surface of the solid piece or substrate.

A manufacture of such features on the surface of the solid piece may involve various tools and engraving methods, such as for example laser engraving, laser ablation, chemical engraving, plasma etching, stamping, milling, etc.

The solid piece may for example be embodied by a tool such as a set of a first rotating roller and a second rotating roller, where the first roller comprises one or more features as cavities in the surface of the first roller and the second roller comprises corresponding inverted congruent features as protrusion on the surface of the second roller. In such a case, the first roller may be designated as a *matrix roller* and the second roller as a *patrix roller.* Hence, when a foil product is fed in a nip between the first roller and the second roller for embossing, each cavity-shaped feature becomes penetrated by the corresponding protruding and congruent feature of the second roller, thereby modifying the structure of the foil product by modification of a normal vector of the foil product's surface.

Another embodiment of the solid piece may be an injection mold.

In an even further non-limiting embodiment, the features may be engraved directly into a customer product rather than being manufactured on a tool.

We refer herein to a *surface-structured product* as being a customer-oriented product, as opposed to a tool used to fabricate a *surface-structured product* that bears the described block structure of features.

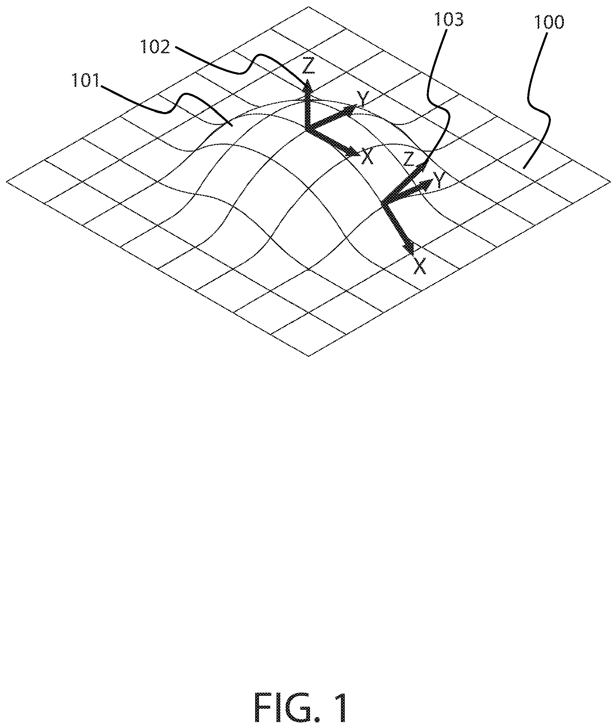

We further define with respect to a surface bearing one or more of the base and/or modulated features, coordinate systems where the axis z is aligned to the normal of the surface of the substrate, the axis x is tangent to the surface and the axis y is the result of the cross product between x and z, such that an orthogonal space is formed. Referring to Figure 1, this illustrates the coordinate systems. Schematically, a base surface **100** surrounds a feature **101,** which is manifested by a modification of a structure of the base surface **100.** Two examples of normal vectors of the feature's 101 surface and corresponding axis z **102** and axis z **103** are illustrated: the axis z **102** being for a top position and the axis z **103** being for a lateral side position on the feature **101,** respectively.

### Considerations about the map

In a known configuration, multiple features may be aligned in a checkerboard fashion on the surface of a tool or surface-structured product, i.e., aligned alongside a two-dimensional grid, such that the multiple features compose a largely uniform area on the surface. In other words, the multiple features cover the concerned area in a constant regular manner. The set of multiple features thus aligned correspond to positions comprised in a map. More specifically, the map is defined as a finite set of positions on the surface of the solid piece of the substrate, e.g., a set of positions (x, y) where *x* and *y* are defined in the uniform two-dimensional grid, hence determining locations of features. The positions may correspond for example to the location of a geometrical center of the respective features' footprint on the surface.

In an example embodiment of the invention described herein, the features may have either one of positive polarity and negative polarity, and be called respectively positive feature and negative feature. By positive polarity is meant that an average z-component of the positive feature is greater than the z = 0 of that feature, and by the negative polarity is meant that the average z component of the negative feature is smaller than the z = 0 of that feature. The z = 0 of any one of the features is typically defined as the z position where the (x,y)-section formed by intersecting a horizontal plane with respect to z-direction with the feature is of the largest surface. Another way of defining z = 0 is that it corresponds to a base surface of the solid piece.

The map may comprise positions of positive and negative features that alternate in sequence and are arranged in a checkerboard fashion. This means that each positive feature is surrounded by four (4), directly neighboring negative features and vice versa except for those features located at a border or the perimeter of the map. In this case the block structure corresponding to the map is called "embossed-debossed". However, in a different example embodiment, the map may comprise only positive features, and in this case the block structure corresponding to the map is called "embossed-embossed". In a further different example embodiment, the map may comprise only negative features, and in this case the block structure corresponding to the map is called "debossed-debossed". In an even further embodiment, the map may comprise positive and negative features that occur with one or more sequences of polarity that are more complex than explained herein above in this paragraph, or even pseudo-random.

In a preferred embodiment of this invention, the features have overall lateral sizes in the (x,y)-plane of the solid piece in a range between 5 µm to 250 µm and heights along the z-axis of the solid piece in a range between 5 µm to 250 µm. The features are meant to alter optical-reflection properties of the surface-structured product by locally modifying the normal of the surface.

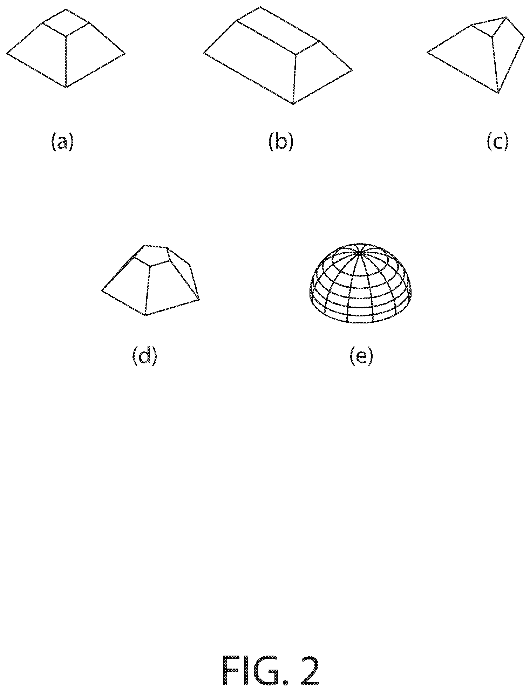

Figure 2 schematically illustrates examples of features, which may be considered to be base features, such as, (a) a truncated pyramid with quadratic base, (b) a truncated pyramid with rectangular base, (c) a truncated tetragon, (d) a truncated pentagon and (e) a half sphere. These examples are non-limitative and other shapes such as the non-truncated versions or a depleted truncated hemisphere (not illustrated in Figure 2) may be considered as well. More generally, a feature can be described by a mathematical function *z* = *f(x, y)* where the z-axis is aligned with the normal of the surface of the solid piece (or substrate).

In the present invention, a subset of positions in the ordered map may be used to represent digital data comprising specific information. The block structure corresponding to this subset may be defined as a *code-block structure.* Conversely, a code-block structure is a block structure with modulated features, the positions of which are comprised in the ordered map. In a preferred embodiment of this invention, an engraved symbol is considered a single element of the code-block structure obtained by modulation, i.e., a transcribing of an alphabet character profile into the base feature to obtain a modulated feature.

It is to be noted that the code-block structure may not necessarily be packed as densely as the map, the density being the count of modulated features of the code-block structure per surface unit. For example, it is typical but not necessarily always the case that in the case of an "embossed-debossed" map, the code-block structure only comprises features of a single polarity. In "embossed-embossed" or "debossed-debossed" maps, it is common that the code-block structure corresponds to a subset of the map that is packed more densely than the map itself, each feature of the code-block structure modulating one or more characters into a symbol.

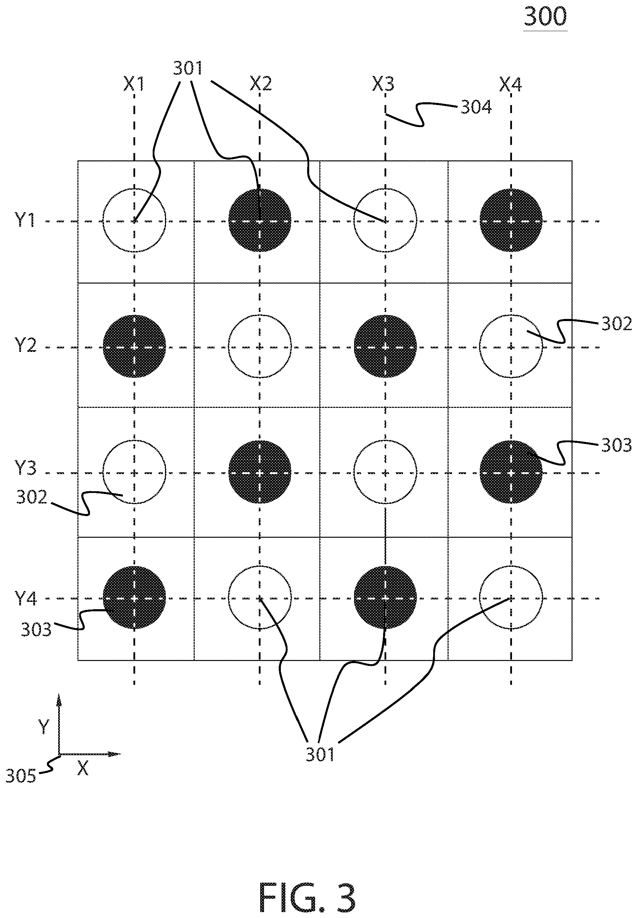

Figures 3 to 9 demonstrate how positions of features corresponding to a code-block structure may be selected out of a map in various cases. For convenience, we will simply use in the following the term *code*-*block structure* to designate the specific positions of specific features corresponding to that code-block structure.

Referring to Figure 3, this illustrates an example of a map **300** in which no code-block structure is selected. Figure 3 illustrates a finite set of positions **301** on a surface of the solid piece or the substrate, the surface and the solid piece or the substrate not being illustrated. Any position on the surface may be expressed in a coordinate system **305.** The positions **301** are those of features, i.e., in the example of Figure 3 a first type of feature **302** illustrated in white circles, and a second type of feature **303** illustrated in textured circles. The feature **302** may be of negative polarity, while the feature **303** may be of positive polarity. The map **300** arranges the first type of features **302** and the second type of features **303** along a regular grid **304,** meaning that the features **302** and the features **303** are arranged in the regular grid **304,** each of the features always having the same distance from their neighboring features, no matter where in the grid they are located. The regular grid **304** in Figure 3 is constructed with rows perpendicular to columns, and has a size of four rows and four columns. Table 1 contains all information of the map **300,** including for each of the 16 features **301** a set of coordinates in the coordinate system **305** and its type. The coordinates for each feature **301** are of a center of the feature, in the present example the center of the circle.

**Table 1: description of map 300**

| **Feature Number** | **X-coordinate** | **Y-coordinate** | **Type of feature** |
|---|---|---|---|
| 1 | X1 | Y1 | first |
| 2 | X2 | Y1 | second |
| 3 | X3 | Y1 | first |
| 4 | X4 | Y1 | second |
| 5 | X1 | Y2 | second |
| 6 | X2 | Y2 | first |
| 7 | X3 | Y2 | second |
| 8 | X4 | Y2 | first |
| 9 | X1 | Y3 | first |
| 10 | X2 | Y3 | second |
| 11 | X3 | Y3 | first |
| 12 | X4 | Y3 | second |
| 13 | X1 | Y4 | second |
| 14 | X2 | Y4 | first |
| 15 | X3 | Y4 | second |
| 16 | X4 | Y4 | first |

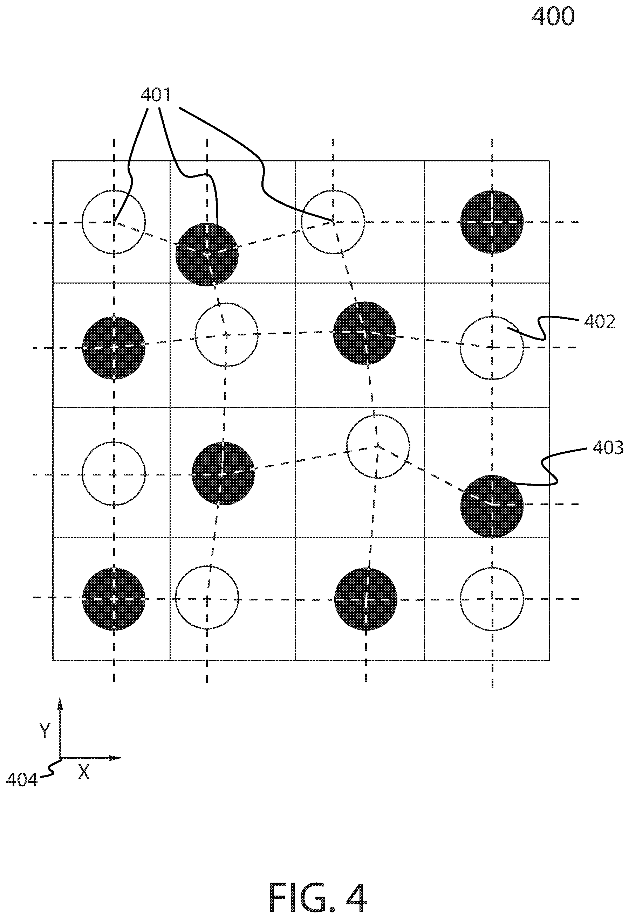

Referring to Figure 4, this illustrates an example of a map **400** in which no code-block structure is selected. Figure 4 illustrates a finite set of positions **401** on a surface of the solid piece or the substrate, the surface and the solid piece or the substrate not being illustrated. Any position on the surface may be expressed in a coordinate system **404.** The positions **401** are those of features, which similar as in Figure 3 may be of a first type of feature **402** illustrated in white circles, and of a second type of feature **403** illustrated in textured circles. The first type of feature **402** may be of negative polarity, while the second type of feature **403** may be of positive polarity. The map **400** is arranged along a randomized grid. Features **402** and **403** have distances from their neighboring features that depend on the randomized position that they respectively occupy in the randomized grid.

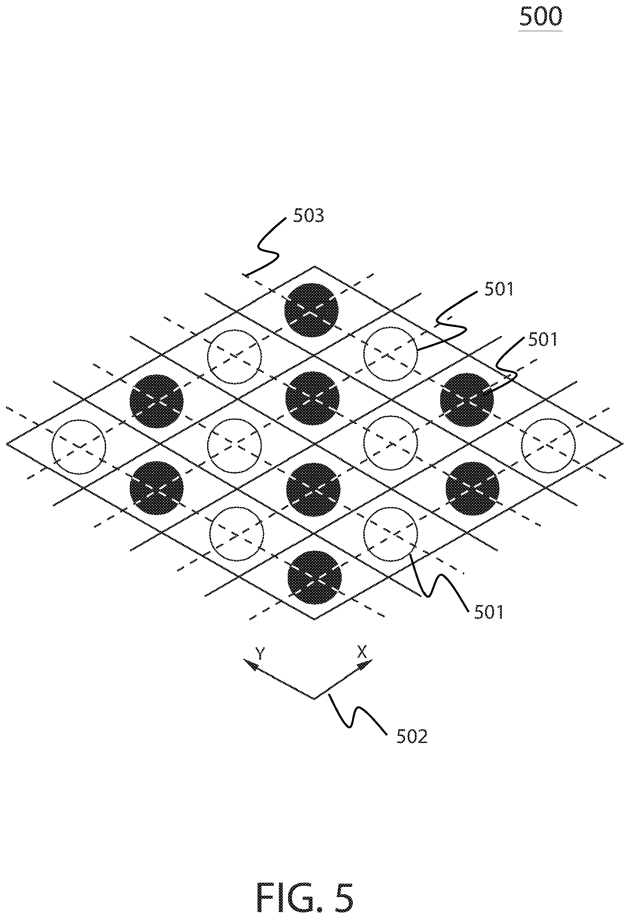

Referring to Figure 5, this illustrates yet a further example of a map **500** is which the features **501** are arranged along a regular grid **503,** but in contrast to Figure 3, the rows and columns in which the features **501** are arranged are not perpendicular. The rows are parallel from one to the other, and the columns are also parallel from one to the other. Any position on the surface may be expressed in a coordinate system **502,** in which conveniently the x-axis and y-axis are oriented according to the rows and columns.

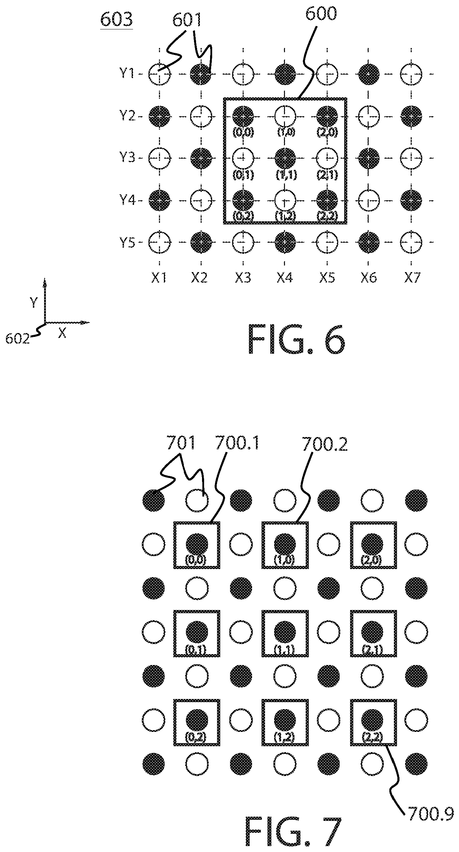

Figure 6 illustrates a code-block structure **600.** In this case, the code-block structure **600** gathers contiguous features selected out of an ordered map **603** of features **601** ordered in a regular grid. Any position on the surface may be expressed in a coordinate system **602.** The code-block structure **600** comprises nine (9) features referenced with code-feature IDs (0,0), (1,0), (2,0), (0,1), (1,1), (2,1), (0,2), (1,2) and (2,2). The code-block structure **600** comprises features of a first type illustrated with white circles and features of a second type illustrated with textured circles, just like the remaining features of the ordered map **603.** However, the features of the code-block structure **600** may comprise modulated features, each corresponding to a symbol that is the transcription of a character of an alphabet. The modulated features may be represented by, e.g., textured circles only, these being potentially all the textured circles of the code-block structure **600,** or by a subset of the textured circles of the code-block structure. Alternatively, the modulated features may be represented by white circles only. In a further alternative, the modulated features may be represented through textured circles and white circles. In some cases, a modulated feature may in fact correspond to a base feature, and hence it may be defined preferably to not to correspond to any symbol. Assuming for the sake of example that the alphabet being used is the Latin alphabet comprising characters a, b, c, d, ..., x, y, z, then any modulated feature may correspond to a symbol that is the transcription of one of these characters. Assuming further, for example, that the modulated features are represented by textured circles having code-feature IDs (0,0), (2,0), (1,1), (0,2) and (2,2), and the modulated features are ordered in the same order of appearance as indicated in the latter list, then it is possible to use the modulated features to convey data, such as the word « echos » consisting in the sequence of symbols corresponding to the letters e, c, h, o and s. Table 2 contains an extract of the map 603, describing how the word « echos » is placed in the ordered map 603.

**Table 2: extract of description for map 603.**

| **Feature number** | **x-coordinate** | **y-coordinate** | **Type of feature** | **Code feature ID** | **Symbol / character** |
|---|---|---|---|---|---|
| ... | | | | | |
| 8 | X1 | Y2 | textured | none | none |
| 9 | X2 | Y2 | white | none | none |
| 10 | X3 | Y2 | textured - modulated | (0,0) | e |
| 11 | X4 | Y2 | white - base | (1,0) | none |
| 12 | X5 | Y2 | textured - modulated | (2,0) | c |
| 13 | X6 | Y2 | white | none | none |
| 14 | X7 | Y2 | textured | none | none |
| 15 | X1 | Y3 | white | none | none |
| 16 | X2 | Y3 | textured | none | none |
| 17 | X3 | Y3 | white - base | (0,1) | none |
| 18 | X4 | Y3 | textured - modulated | (1,1) | h |
| 19 | X5 | Y3 | white - base | (2,1) | none |
| 20 | X6 | Y3 | textured | none | none |
| 21 | X7 | Y3 | white | none | none |
| 22 | X1 | Y4 | textured | none | none |
| 23 | X2 | Y4 | white | none | none |
| 23 | X3 | Y4 | textured - modulated | (0,2) | o |
| 24 | X4 | Y4 | white - base | (1,2) | none |
| 25 | X5 | Y4 | textured - modulated | (2,2) | s |
| 26 | X6 | Y4 | white | none | none |
| 27 | X7 | Y4 | textured | none | none |
| 28 | X1 | Y5 | white | none | none |
| ... | | | | | |

As may be read in Table 2, the features with numbers 10, 12, 18, 23 and 25 are modulated features representing symbols for characters e, c, h, o, and s. These features have code-feature IDs and are part of the code-block structure **600.** Remaining features of the code-block structure are base features and do not represent any symbols. Features outside the code-block structure **600** have a similar structural and visual appearance as those from the code-block structure **600** however comprise no modulated features among the features represented in textured circles.

A packing density of the code-block structure **600** is maximum for the map of Figure 6, meaning that each feature **601** of the code-block structure **600** is adjacent to at least another feature **601** of the code-block structure **600.**

Figure 7 illustrates a code-block structure **700.1-700.9** selected out of an ordered map of features **701** in a regular grid, similar to the regular grid represented in Figure 6. Similar as in Figure 6, the code-block structure **700.1-700.9** comprises 9 features referenced with code feature IDs (0,0), (1,0), (2,0), (0,1), (1,1), (2,1), (0,2), (1,2) and (2,2). However, the features of the code-block structure **700.1-700.9** are all of a same type, illustrated here by a textured circle. Each feature of the code-block structure **700.1-700.9** is separated from its nearest feature of the code-block structure by at least another feature **701** of the map, which is not part of the code-block structure **700.1-700.9.** Hence, a density of the features of the code-block structure **700.1-700.9** is less than that of the features of the code-block structure **600** of Figure 6, meaning that there are less features of the code-block structure per area unit of the surface on which the map is intended to be realized.

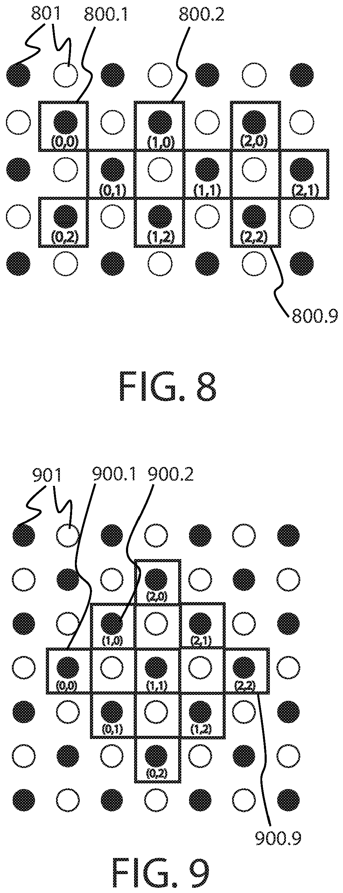

Figure 8 illustrates a code-block structure **800.1-800.9** selected out of an ordered map of features **801** in a regular grid, similar to the regular grids of Figures 6 and 7. The code-block structure **800.1-800.9** comprises nine (9) features referenced with code feature IDs (0,0), (1,0), (2,0), (0,1), (1,1), (2,1), (0,2), (1,2) and (2,2). Like in Figure 7, the features of the code-block structure are all of the same type, illustrated here by a textured circle. In contrast to Figure 7, the features (0,0), (0,1), and (0,2), which in Figure 7 belong to a same column, in Figure 8 do not belong to a same column, and are therefore said to be *non-grid aligned.*

Figure 9 illustrates a code-block structure **900.1-900.9** selected out of an ordered map of features **901** in a regular grid, similar to the regular grids already encountered in Figures 6 to 8. The code-block structure **900.1-900.9** comprises nine (9) features referenced with code feature IDs (0,0), (1,0), (2,0), (0,1), (1,1), (2,1), (0,2), (1,2) and (2,2) Like in Figures 7 and 8, the features of the code-block structure are all of the same type, illustrated here by a textured circle. In the example of Figure 9, the features are grid aligned, but in contrast to Figure 7, the rows of features from the code-block structure in Figure 9 are grid aligned on lines at 45° from the rows depicted in Figure 7.

In a preferred embodiment of the present invention, the code-block structure itself aligns on a two-dimensional grid, such as the ones depicted in Figures 3, 5, 6, 7, 8, and 9 and unlike the one depicted in Figure 4. In the latter, the engraved features are arranged in a randomized manner.

The features comprised in the code-block structure preferably are modulated features and base features. Each modulated feature and base feature has respectively a three-dimensional modulated-feature profile and a three-dimensional base feature profile. Each of the modulated-feature profiles is the result of applying a corresponding modulation by means of a modulation to one of the three-dimensional base feature profiles, according to a specific corresponding information. In this sense, and when used to transcribe data in the code-block structure, each modulated feature is a symbol, which in turn is a transcription of a character of an alphabet. The alphabet is a collection of characters, which are distinct objects of well-defined elementary data. In other words, the modulated features are used as symbols to code data, and they are then included in the code-block structure. Thereby, at least a part of the data is transcribed by the code-block structure of modulated features. Eventually, the code-block structure constitutes a block structure corresponding to the at least one part of the data.

The modulated features, which are part of a block structure, are arranged according to an ordered map. This is a way that allows knowing where each of the modulated features may be found on the engraved solid piece, in order to reconstitute and detect the symbols used in the code-block structure and hence recover the data carried on the surface of the solid piece. In a preferred embodiment, a code-block structure of, e.g., 33 lines and 33 rows comprises within itself a small set of, e.g., 64 modulated features that represent a specific pattern, which may be a synchronization pattern. These modulated features may be specific symbols of the alphabet, however in the present example these modulated features are not used to encode the data itself. At the time of the optical read-out of the code-block structure, an image sensor acquires an image; the image is transmitted subsequently to an image processor; then, the image processor analyzes the acquired image and correlates the synchronization pattern therein with an application-specific synchronization pattern in order to determine the reference or origin for a decoding operation. The image processor is programmed such that, after it correlates the synchronization pattern, it knows where the modulated features, i.e., the symbols may be found on the engraved solid piece and begins to detect/demodulate the symbols used in the code-block structure, decodes the newly arranged information and hence recovers the information on the surface of the solid piece.

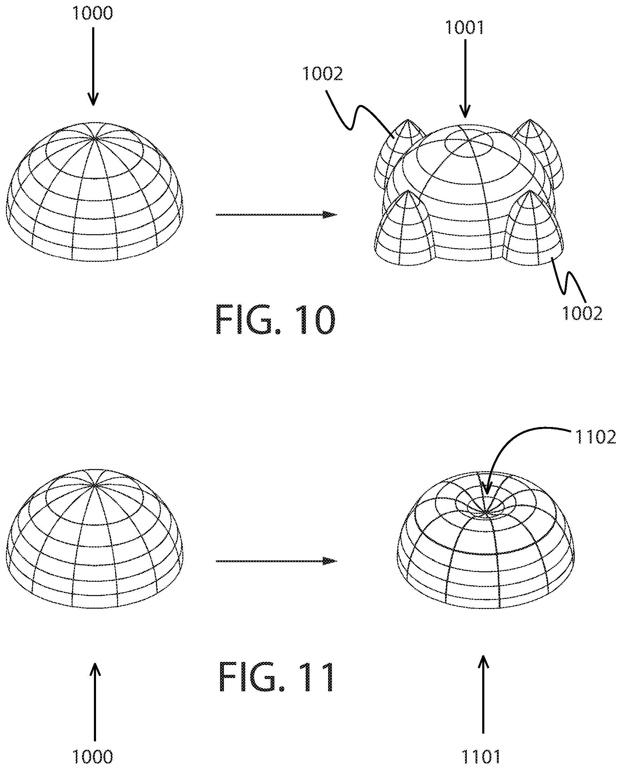

Referring now to Figure 10, this shows an example of a base feature **1000** and a corresponding modulated feature **1001** that may be obtained after applying a modulation to the base feature **1000** (modulation operation not illustrated in Figure 10). A base feature may be considered an elementary component of a block structure. As explained in the glossary herein above, the base feature is an engraved elementary three-dimensional topographical element engraved into the surface of the solid piece. In the example of Figure 10, the base feature **1000** is illustrated schematically as a positive feature with the shape of a half-sphere. The modulated feature may be understood as a base feature onto which a modulation function has been applied, the modulation being, in the sense of the present invention, the act of purposely transcribing a character of an alphabet into a controlled physical three-dimensional topographical structure. Referring again to the glossary, the modulated feature is an engraved three-dimensional topographical element, whose three-dimensional modulated-feature profile is the result of applying a feature profile by means of a specific operation, i.e., the modulation to a base-feature profile. In a very simple case, not illustrated in Figure 10, the feature profile may have no effect of change of the base feature, and hence the modulated feature may be identical to the original base feature. However, in the example of Figure 10, the modulation has the effect of adding a plurality of half cones **1002** to the half-sphere basic feature **1000.**

Referring to Figure 11, this shows the same example of a base feature **1000** as in Figure 10, and a corresponding modulated feature **1101** that may be obtained after applying a modulation to the base feature **1000** (modulation operation not illustrated in Figure 11). The modulation has the effect of adding a crater **1102** to the half-sphere basic feature **1000.**

In line with the present invention, the modulation of a basic feature may be made comparatively as weak as possible, as will be explained in the following. In this context, the term "weak" means that a two-dimensional integral over the entire feature of the angle difference between the normal of the modulated feature and that of the base feature on the surface-structured product, is below a certain threshold in human vision capability. The purpose is to generate a modification of the base feature such that an interaction between the impinging light and the modulated feature looks very similar to the interaction between the impinging light and a base feature in view of the human eye. In such a configuration, under most lighting conditions, the modulated features look very similar to the base features and therefore the respective symbols corresponding to the modulated features in the code-block structure of modulated features are imperceptible to the human eye. However, if an appropriate image of the code-block structure comprising modulated features is taken with a digital camera, and subsequently processed using a computerized system such as, e.g., a smartphone, a tablet, a PC, an embedded controller, it is possible to reveal the original information carried in the code-block structure of the image. In addition to the modulated features looking very similar to the base features, a number of additional factors make it even more difficult to differentiate a detection of modulated features from a detection of base features. These additional factors comprise for example:
- diffuse lighting;
- amplitude variations in reflected light between light reflected by a modulated feature and light reflected by a base feature below a threshold perceptible to the human eye;
- outshining of reflection originating from modulated features by reflections produced by possible other surrounding base features, modulated features and surfaces;
- color-dependent sensitivity of the human eye.

At the same time as the individual modulated features carry information in a manner imperceptible to the human eye, a plurality of the modulated features may also be used by themselves or together with base features to create an aesthetic ensemble perceptible to the human eye. Such aesthetic ensemble may for example be a surface of the surface-structured product or solid piece that defines for example a logo, a repetitive motif, or a pictorial representation of an object.

Typically, by adding redundancy in the form of, e.g., a forward error-correcting (FEC) code, the code-block structure may be constructed in such a way that the initial information coded into the code-block structure can still be recovered if any one of the following occurs:
- a perfect reliability in the modulated-feature read-out is not achievable;
- the modulated features of the code-block structure is erased, i.e., superseded by another embossed motif that does not carry the code-block structure;
- only a part of the code-block structure is in the field of view of the camera.

A further typical application of the present invention is to authenticate a product by taking a picture of the surface-structured product or its packaging, processing the picture to identify possible code-block structures and extract the information contained in such code-block structures.

Various modulation approaches may be used, resulting in corresponding more or less influence in light impinging on the modulated feature, depending on the target digital means for reading the image, e.g., a smartphone with a comparatively low-resolution camera in a relatively poor lighting condition or a high-end professional camera with perfect, directional lighting.

The following exemplifies types of modulation that are of typical use.

It is of convenience to differentiate a few typical yet general cases:
- multiplicative modulation ;
- (scaled) z-offsetting modulation ;
- additive modulation ;
- xy-offsetting modulation.

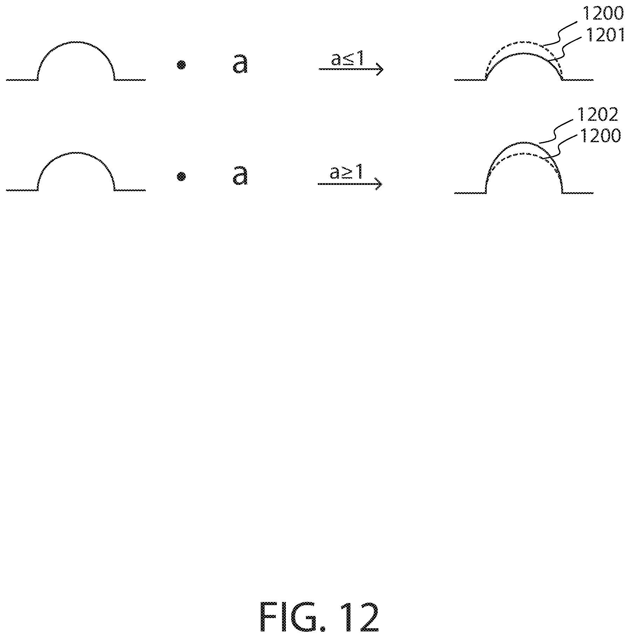

The multiplicative modulation allows height modulation or polarity flipping (positive to negative and vice-versa) of the complete base feature. Referring to Figure 12, this contains schematic examples of multiplication modulation by a factor a. Two examples are illustrated therein, one in which *a* < *1* and hence the height modulation reduces the height of the base feature **1200** to obtain a modulated feature 1201 with reduced amplitude, and another one in which a > 1 and hence the height modulation increases the height of the base feature to obtain a modulated feature **1202.**

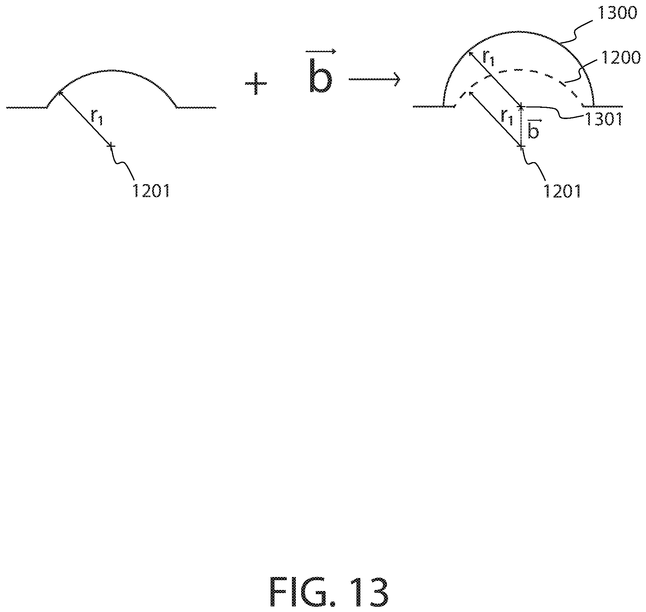

The offsetting modulation permits a height modulation of the complete base feature. It is clamped generally to zero, as it is common practice to select positive-only features or negative-only features approach. Figure 13 illustrates an example of z-offsetting modulation of spherical base feature where the center **1201** is translated by vector *̅b̅*̅ in z-direction to the new center 1301. Hence, the base feature **1200** is translationally elevated by an amount of vector *̅b̅*̅ to obtain modulated feature **1300.** This supposes that the base feature **1200** possesses a virtual shape below the surface from which the base feature is elevated.

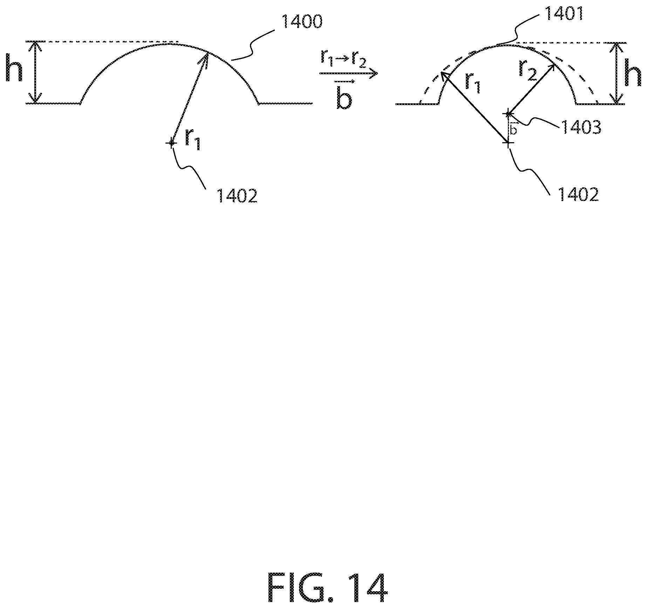

Figure 14 illustrates an example of scaled z-offsetting modulation in which the radius of a sphere is modified while the part extending over the surface by a height *h* is kept constant. In the illustrated example, a radius *r*1 of a base feature **1400** is reduced such that the radius becomes *r2* for a modulated feature **1401** while at the same time the center **1402** is translated to center **1403** by vector *̅b̅*̅.

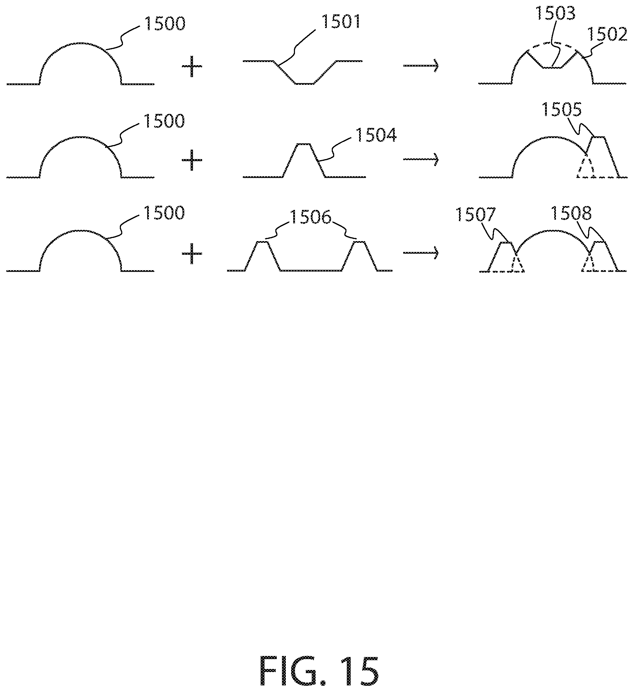

The additive modulation, which also covers the subtraction case, allows for adding a position-dependent structure to the base feature. Figure 15 demonstrates three (3) examples of such additive modulations, where one or several cone features are added onto a hemispherical base feature **1500** at various positions. In the example illustrated in the upper part of Figure 15, a cone feature **1501** added to the base feature **1500** results in a modulated feature **1502** having a cone shaped cavity **1503** on top of the hemispherical shape. In the middle part of Figure 15, a further cone feature **1504** shaped as a positive feature is added to the base feature **1500** and results in the cone feature merging into a right side **1505** of the hemispherical shape. In the lower part of Figure 15, two even further cone features **1506** shaped as two positive features distant from each other by less than a base diameter of the base feature **1500,** results in the cone features merging into respective left **1507** and right **1508** sides of the hemispherical shape.

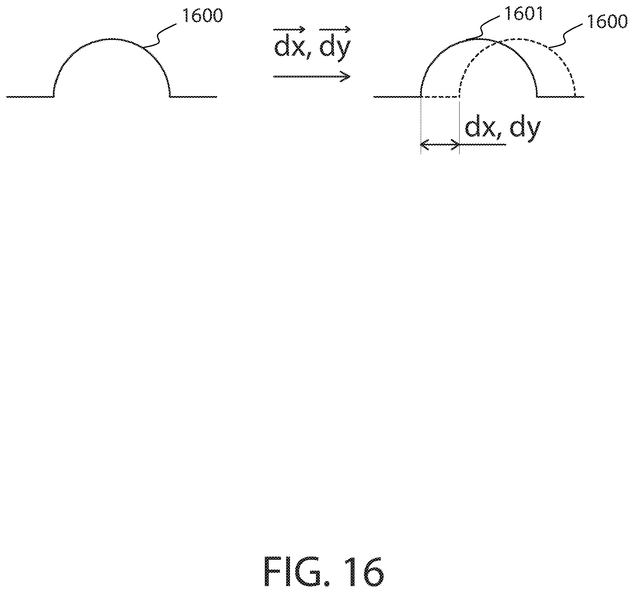

Figure 16 demonstrates a further offsetting modulation, in which a modulated feature **1601** appears as a laterally moved version of base feature **1600** in the (x,y)-plane of the surface of the solid piece or surface-structured product, wherein the lateral movement is by a vector d̅ₓ̅ and/or d̅_̅{̅y̅}̅.

Various types of modulation may also be combined by modulating more than one parameter. This might be desired to produce a stronger effect when required, e.g., a more pronounced effect on intensity of light reflected by the so-obtained modulated feature in order to facilitate a read-out and retrieval by means of a software-driven image-sensor/processor combination.

In a typical case, given a layout of features along a uniform grid such that two neighboring positions along either one of the main axis of the grid, are separated by a value d, a hemispherical base feature of amplitude 1 and a height h are modulated by one, two or four cones of truncated height *h*, base width *w* and angle to the normal theta, placed at *(d*/*2,0), (-d*/*2,0), (0,-d*/*2)* or/and *(0, 0+d*/*2)* relative to the central position of the sphere. See Figure 10 for an example illustration of this case.

In another typical case, a single cone of inverse polarity than the hemispherical base feature but of any height *h2* is placed in the center of the hemispherical base feature, i.e., at *(0,0)* relative to the central position of the hemispherical base feature. See Figure 11 for an example illustration of this case.

### Engraved solid piece

As previously explained the engraved solid piece may be either a tool or a surface-structured product. In either case, the engraving is made on a material surface.

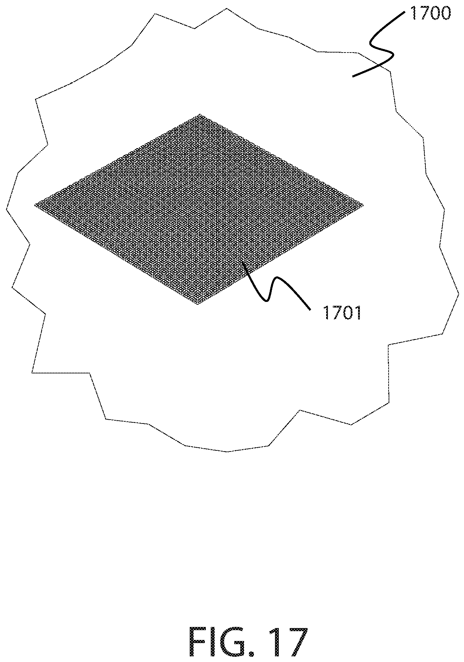

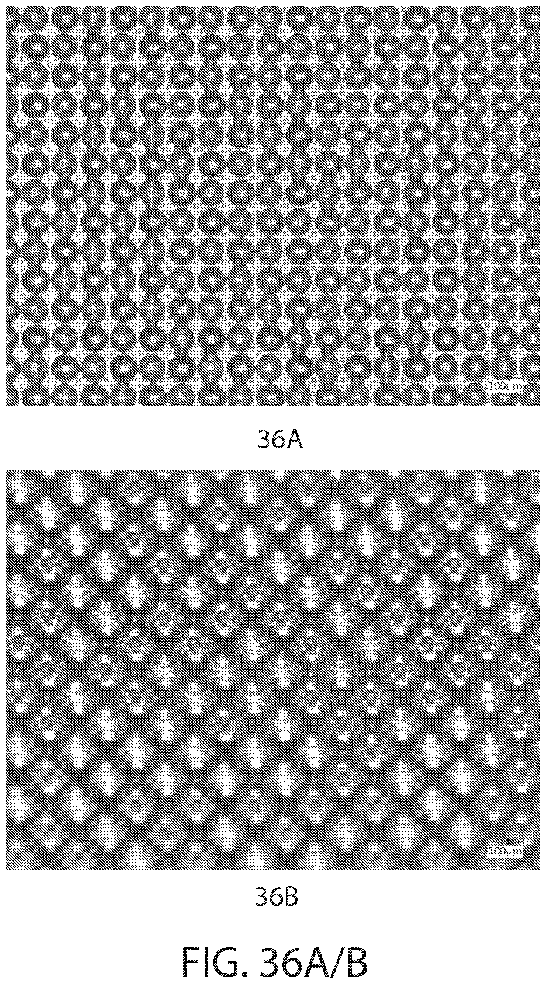

Figure 17 illustrates a part of a surface **1700** of a tool or surface-structured product. The surface **1700** is covered by a plurality of block structures, such as an exemplary block structure **1701** shown in Figure 17. As explained in the glossary, the block structure **1701** is a spatially restricted collection of base features and/or modulated features, which are spread over the surface of the solid piece or the substrate according to a map. The overall shape of the block structure **1701** shown in Figure 17 is a non-limitative example. The block structure may well have other shapes such as for example a disk, or any other shape representing an object, such as a company logo (not represented in Figure 17). As a practical example, Figures 36A/B exhibit two microscope images of a tool surface representing base features and modulated features alongside each other: a) top-view of the tool surface and b) angled view of the tool surface.

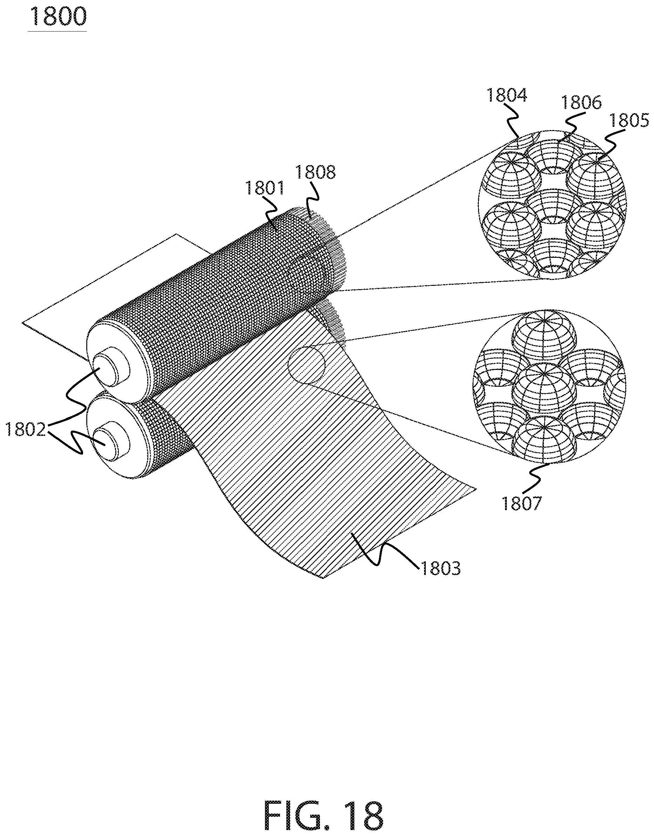

Figure 18 illustrates an example in which a block structure **1801** is employed in an embossing head **1800,** which comprises two embossing rollers **1802** and configured to emboss a foil product **1803.** The two embossing rollers **1802** are configured as patrix/matrix roller pair, which may be synchronized by a synchronization gear **1808.** A magnified excerpt **1804** of the block structure **1801** illustrates an example of positive features **1805** and negative features **1806** to be embossed. The part of the foil product **1803** having been embossed is shown as a hashed surface. A magnified excerpt **1807** of the foil product illustrates an example of embossed positive and negative features.

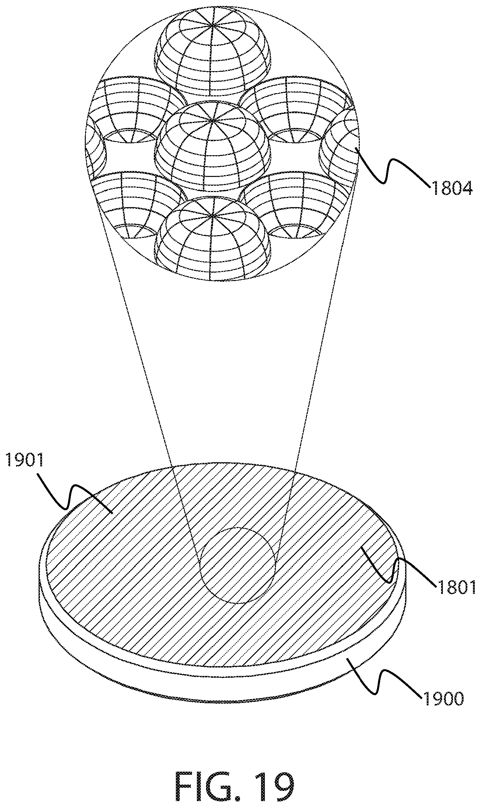

Figure 19 illustrates an example in which the block structure **1801** is employed in an surface-structured product **1900,** which is a disk-shaped object having an engraved surface **1901.** A magnified excerpt **1804** of the block structure **1801** illustrates an example of positive features and negative features.

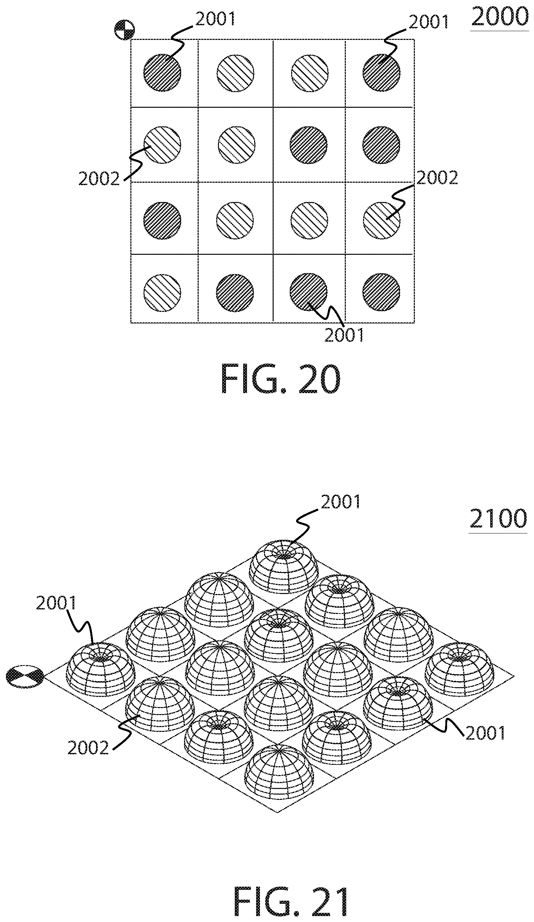

Figure 20 illustrates a part of a map **2000,** which shows determined positions of modulated features **2001** and base features **2002** that correspond to a part of a code-block structure in a block structure, such as for example the block structure **1801** of Figures 18 or 19. Figure 21 illustrates the part **2100** of the code-block structure that contains the illustrated map **2000** of Figure 20 of modulated features **2001** and base features **2002.** In this illustrated example, the modulated features **2001** are obtained according to the modulation illustrated in Figure 11.

In a general embodiment, the engraved solid piece carries data comprising specific information on one of its surfaces. Hence, the surface is covered by a plurality of block structures, comprising at least a first block structure. Each block structure, including the first block structure, is a spatially restricted collection of modulated features and base features. These modulated features and base features are spread over the surface of the engraved solid piece according to a map.

Each modulated feature and each base feature has respectively a three-dimensional modulated-feature profile and a three-dimensional base-feature profile. Each of the modulated-feature profiles is the result of applying a corresponding modulation by means of a modulator to one of the three-dimensional base-feature profiles, according to a specific corresponding information. Each modulated feature corresponds to a symbol that is a transcription of a character of an alphabet. The alphabet is a collection of characters, which are distinct objects of well-defined elementary data. Each of the base features is an engraved elementary three-dimensional topographical element of the surface. Each of the modulated features is an engraved three-dimensional topographical element of the surface. At least a part of the data is transcribed by a code-block structure of modulated features, the code-block structure thereby constituting at least a part of a block structure corresponding to the at least one part of the data. The modulated features of the first block structure are arranged according to a first ordered map, the first ordered map being a first finite ordered set of first positions of the modulated features of a first code-block structure on the surface, the first code-block structure corresponding to a first part of the data, and the first ordered map is further configured to arrange the modulated features of the first block structure to constitute an aesthetic ensemble on the surface and render the respective symbols corresponding to the modulated features of the first code-block structure imperceptible to the human eye, but retrievable by means of a software-driven image-sensor/processor combination.

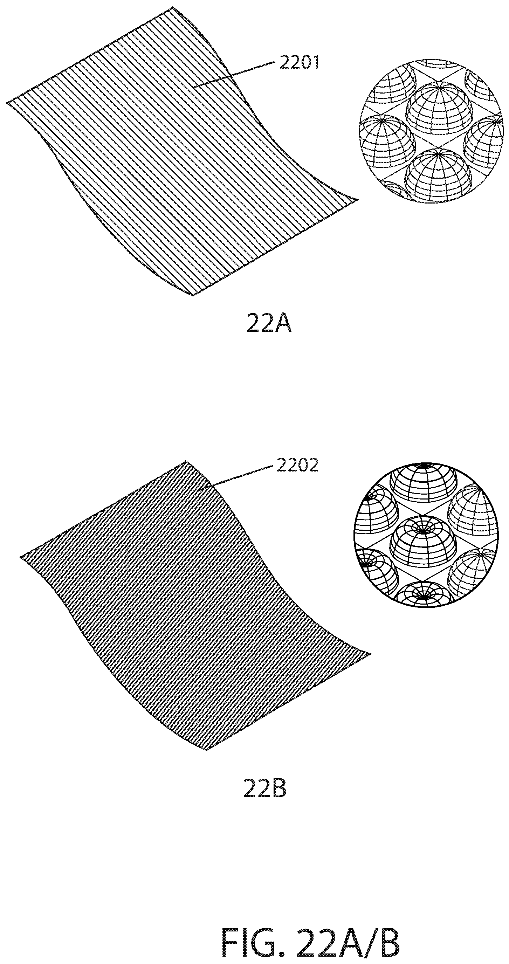

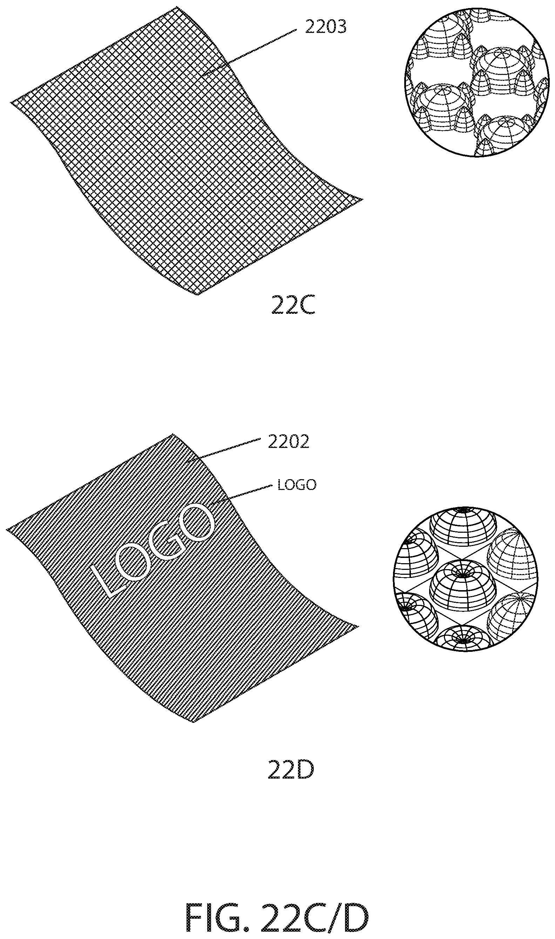

Figures 22A-22D illustrate 4 examples of embossed foil-products: in Figure 22A a first embossed foil product **2201** comprising embossed base structures having a hemispherical shape and regularly aligned on a grid, as shown in the magnified excerpt, in Figure 22B a second foil product **2202** comprising embossed modulated features similar to those illustrated in the block structure **2100** of Figure 21, except that here they result from embossing the block structure **2100** in the foil product **2202,** in Figure 22C a third foil product **2203** comprising embossed modulated features such as the ones shown in Figure 10, and in Figure 22D an embossed foil product **2202** similar to that of Figure 22B, i.e., with modulated features embossed therein, except for an aesthetic motive superposed on them, represented here as the word "LOGO", all embossed in the foil-product **2202.** It is to be noted that the aesthetic motive may not comprise any modulated features nor base features, but is surrounded at least by modulated features.

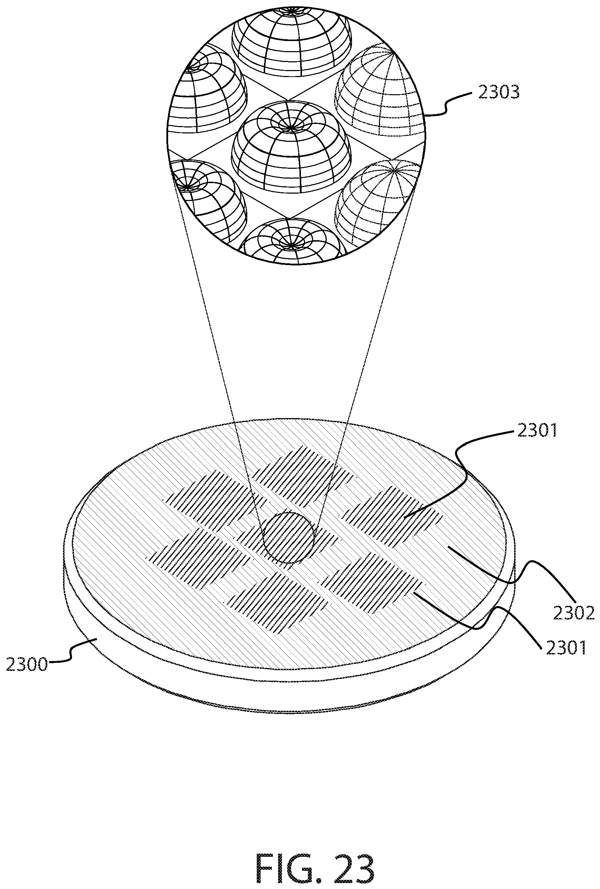

Figure 23 illustrates an example of a surface-structured product **2300** with engraved block structures on one of its surfaces. the block structures comprise a plurality of first code-block structures **2301** in which the modulated features are arranged according to a first ordered map, which is a first finite ordered set of first positions of the modulated features of a first code-block structure on the surface, the first block structures **2301** corresponding each to a first part of data (data and code-block structure not illustrated on the surface of the surface-structured product **2300** in Figure 23). The first block structures **2301** are surrounded by a second block structure **2302,** which is represented in Figure 23 by a surface hashed differently as the surfaces illustrating the first block structures **2301.** The second block structure **2302** is a second spatially restricted collection of exclusively a plurality of at least one of the base features (base features of the second block structure not illustrated in Figure 23), which are arranged on the surface of the surface-structured product **2300** according to a second pattern. The first block structures **2301** are arranged on the surface of the surface-structured product, such that they or more precisely the modulated features that they comprise constitute an aesthetic ensemble on the surface. The aesthetic ensemble is shown here as an ensemble of seven (7) approximately square patches. The aesthetic ensemble is completed by the second block structure **2302** which is shown to surround the patched of first block structures **2301.** Figure 23 further illustrates a magnified part **2303** of a first block structure **2301** with modulated features and base features.

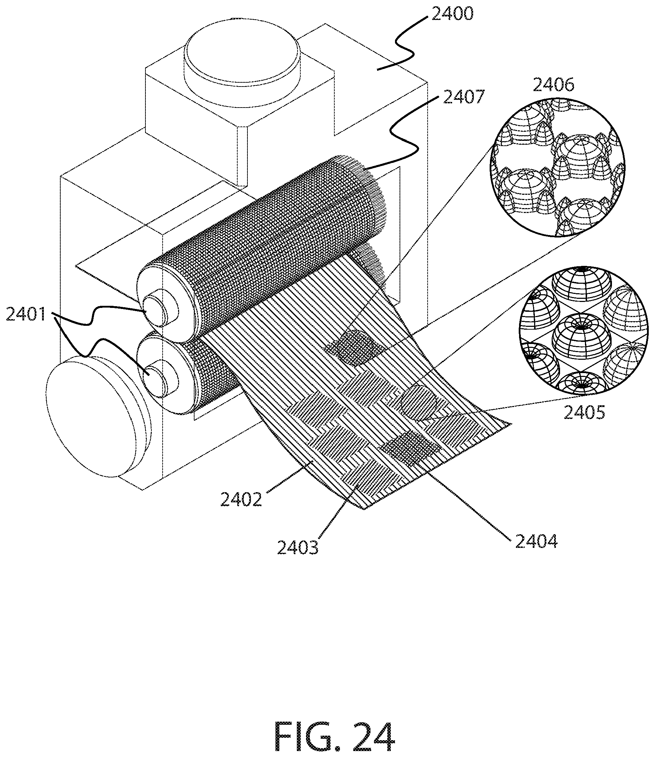

Figure 24 illustrates a synchronized embossing head **2400,** inside which an optional quick-exchange cassette (not explicitly illustrated for better reading) is configured to house at least two engraved solid pieces **2401** with optional synchronization gears **2407,** in which each engraved solid piece has a cylindrical symmetry, and is configured as an embossing tool for a transfer of modulated features and/or base features into a substrate, in the case of Figure 24 this is a foil product. The surface of one of the solid pieces **2401,** i.e., one of the embossing tools, is covered by block structures, which result in the embossing of the modulated features and base features comprised therein into the foil product. The illustrated example shows three (3) different types of embossed block structures, namely a first embossed block structure **2402** comprising embossed base features only, a second embossed block structure **2403** comprising first modulated features and base features as illustrated in the magnified excerpt **2405** and a third embossed block structure **2404** comprising second modulated features as illustrated in the magnified excerpt **2406.** It is apparent that the embossed first, second and third block structures do not overlap. Furthermore, the block structures are arranged along a randomized grid.

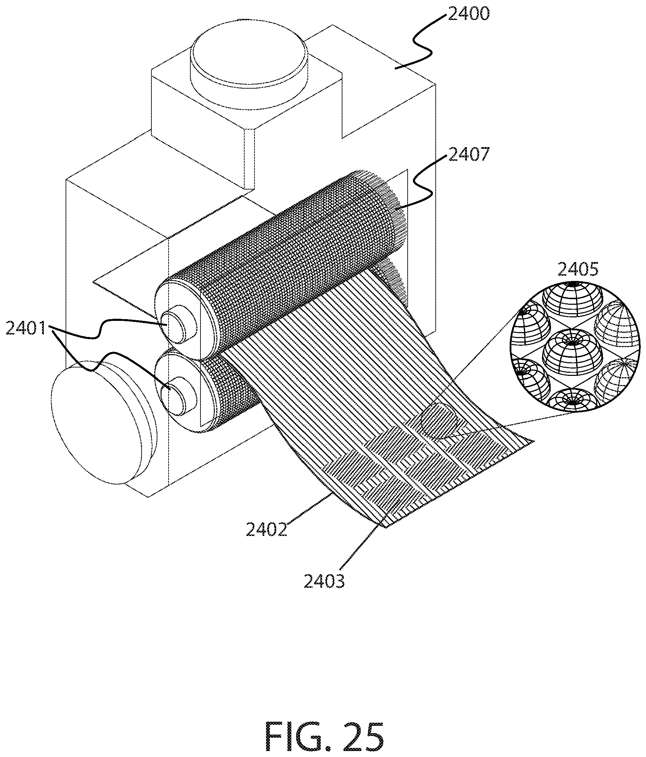

Figure 25 illustrates a similar synchronized embossing head **2400** with a similar optional quick-exchange cassette as in Figure 24, in which the block structures engraved in the solid pieces **2401** result in the embossed block structures **2402** and **2403,** which do not overlap, similarly as illustrated in Figure 24. The block structures **2402** and **2403** respectively may correspond to differently ordered maps, and the block structures respectively ordered maps are arranged along a regular grid.

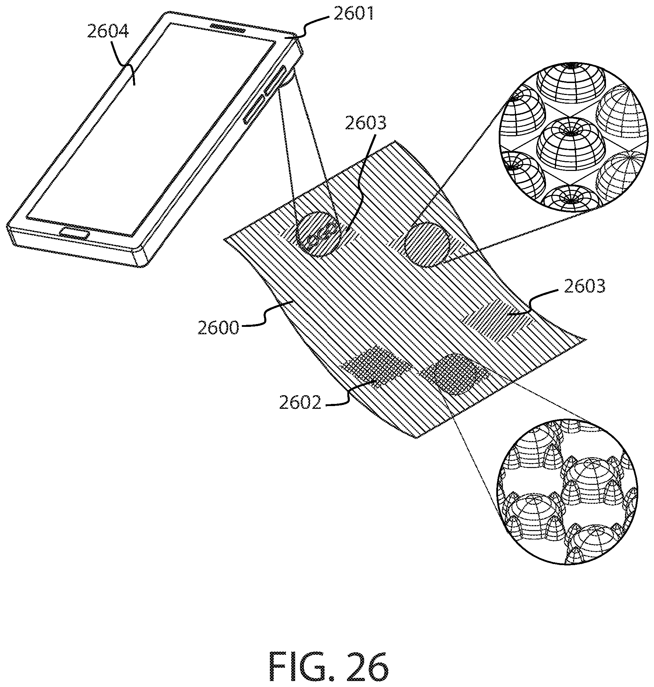

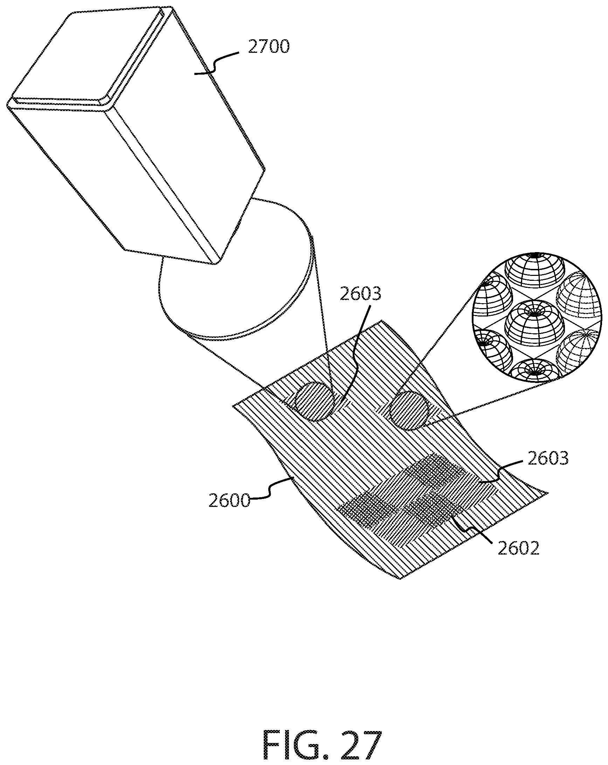

Figures 26 and 27 show examples of devices **2601** and **2700** used to read and retrieve the positions of modulated features from the code-block structures and block structures, e.g., a code-block structure **2602** comprising a type A of modulated features, a code-block structure **2603** comprising a type B of modulated features, and a block structure **2603** comprising type B of modulated features and an aesthetic motive superposed on them, represented here as the word "LOGO", all embossed in a foil-product **2600.** It is noted that the aesthetic motive may not comprise any modulated features nor base features, but is surrounded at least by modulated features of type B, which are used to code data, which in turn is detected by the devices **2601** and **2700** and displayed on visualization means **2604** and **2704** of the respective devices. In both cases, the reading is done using light reflected by the block structures (impinging light subsequently reflected by the block structures not illustrated in Figures 26 and 27) and captured by an optical reading system of a smartphone **2601** in Figure 26 or of a camera **2700** in Figure 27. Both, smartphone **2601** and camera **2700,** comprise or are attached to means and software to analyze an image taken from the block structure, and process it in order to decode the data and the specific information comprised in it, as carried in the block structures. On the smartphone **2601,** the decoded data may be displayed eventually on the respective visualization means **2604.**

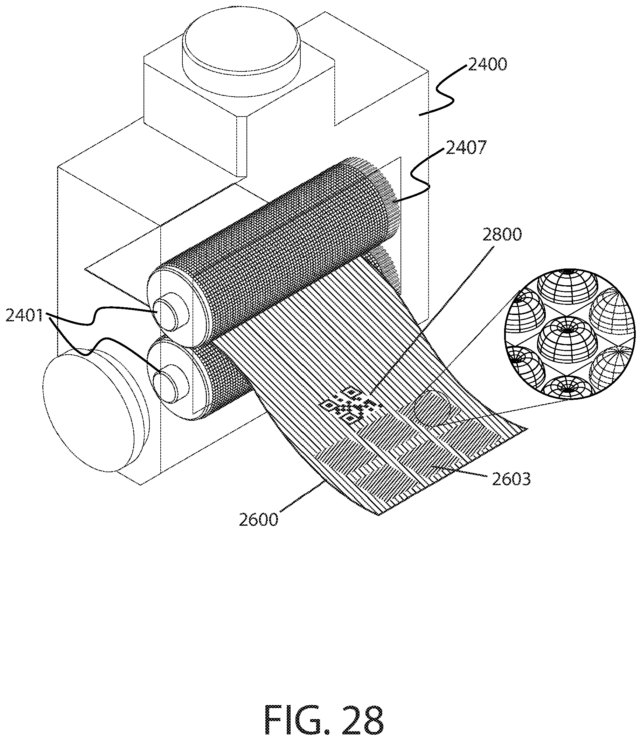

Figure 28 shows a further example of a synchronized embossing head **2400** similar to that already discussed for Figures 24 and 25, and an embossed foil-product **2600** comprising block structures **2603** similar as in Figures 26 and 27. A QR-code **2800** is created on the surface of the foil-product **2600** as an aesthetic motive, such that its constituents comprise surfaces that do not comprise any modulated features nor base features. The QR-code **2800** may thus be read-out as a simple aesthetic feature and decoded as such in an already well-known manner, without involving any analysis that may be used to detect and analyze modulated features.

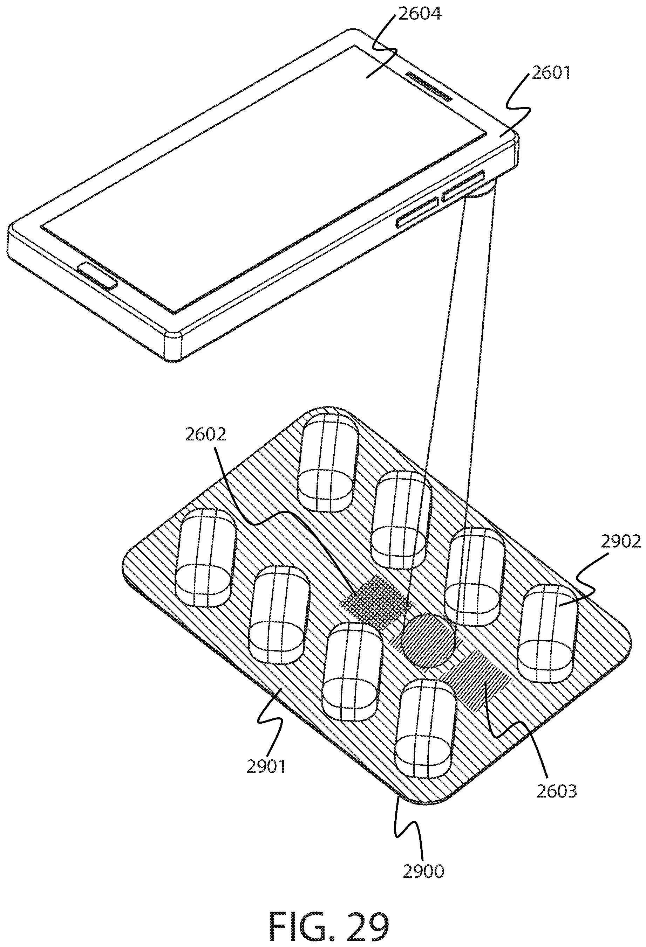

Figure 29 illustrates an example of a product in the form of a blister product **2900,** for packaging pills, liquid-filled pods or any other blister-packed product **2902,** these being surrounded by engraved base features **2901.** The blister product **2900** further comprises block structures **2602** and/or **2603** similar as in Figures 26 and 27, which enable to carry data. The data may for example allow determining the authenticity of the blister **2900** and/or providing information about the pills, liquid-filled pods or other blister-packed product **2902.** The block structures **2602** and/or **2603** may be read out for example by means of a smartphone **2601,** and the result of the processed read-out of the block structures **2602** and/or **2603** may be displayed on visualization means **2604.**

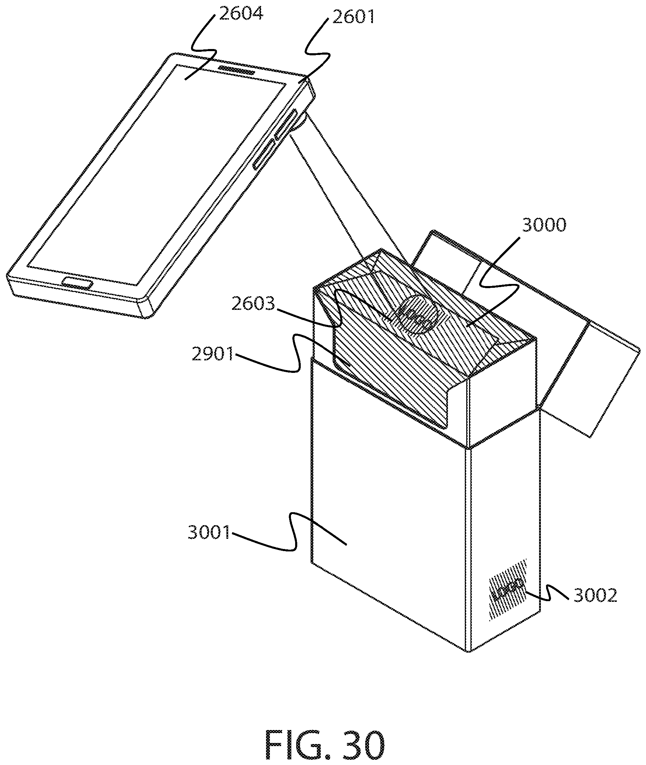

Figure 30 illustrates a further example of case use for a product, more precisely an inner liner **3000** of an outer package **3001,** e.g., for cigarettes. The inner liner foil material **3000** is embossed with base features **2901** and at least a block structure **2603** comprising modulated features and an aesthetic motive superposed on them, represented here as the word "LOGO". It is to be noted that the aesthetic motive may not comprise any modulated features nor base features, but is surrounded at least by modulated features, which are used to code data, which in turn is detected by the device **2601** and displayed on the visualization means **2604** of the device **2601.** Figure 30 also illustrates an optional duplicate embossing **3002** of the at least one block structure **2603** that comprises the aesthetic motive superposed on the modulated features, embossed into the material of the outer package **3001.** The optional duplicate embossing **3002** may for example be useful for a purpose of anti-counterfeiting and forensic authentication.

It is noted that while the outer package **3001** resembles a cigarette package in the example of Figure 30, it may in fact be a secondary outer package for any type of product, e.g., food, jewelry, pharmaceutical drugs, confectionary etc. in cardboard, stiffened paper laminate or any other suitable foil material. The outer package **3001** may in addition be shrink-wrapped into a (transparent) polymer film as is customary in the packaging industry (not illustrated in Figure 30). This may be realized such that a read-out of the block structure **3002** remains possible after shrink-wrapping the outer package **3001.**

Above-mentioned embossing methods and surface-structured products are generally suitable to be implemented or obtained out of an online-production line, digital press, or traditional converter.

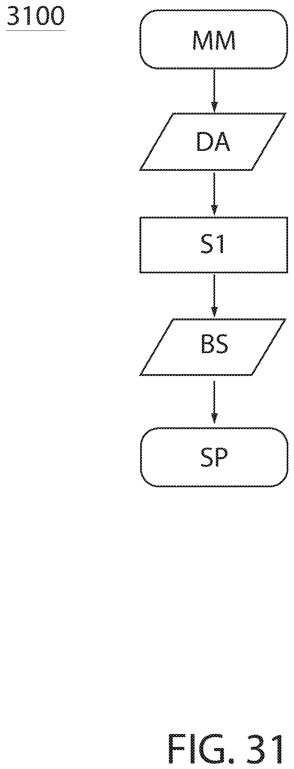

Figure 31 contains a flowchart **3100** illustrating a method for manufacturing MM an engraved solid piece **SP** configured for carrying data **DA** comprising information, the data being carried on a surface of the engraved solid piece. The data **DA,** which is transcribed by a code-block structure of modulated features, whereby the code-block structure thereby constitutes a block structure corresponding to the data, is engraved S1 on the surface as a plurality of block structures **BS,** which comprise at least a first block structure, whereby
- each block structure **BS** is a spatially restricted collection of modulated features and base features, which are spread over the surface of the engraved solid piece,
- each modulated feature and each base feature having respectively a three-dimensional modulated-feature profile and a three-dimensional base-feature profile,
- each of the modulated-feature profiles being the result of applying a corresponding modulation to one of the three-dimensional base-feature profiles, according to a specific corresponding information,
- each modulated feature further corresponding to a symbol, which is a transcription of a symbol of an alphabet,
- the alphabet being a set of characters, which are distinct objects of a well-defined elementary data,
- each of the base features being an engraved elementary three-dimensional topographical element of the surface,
- each of the modulated features being an engraved three-dimensional topographical element of the surface,
- at least a part of the data (DA) being transcribed by a code-block structure of modulated features, the code-block structure thereby constituting a block structure corresponding to the at least one part of the data **DA,**

whereby the modulated features of the first block structure **BS** are arranged according to a first ordered map, the first ordered map being a first finite ordered set of positions of the modulated features of a first code-block structure on the surface, the first block structure corresponding to a first part of the data, and
whereby the first ordered map further is configured to arrange the modulated features of the first block structure **BS** to constitute an aesthetic ensemble on the surface and render the respective symbols corresponding to the modulated features of the first code-block structure imperceptible to the human eye, but retrievable by means of a software-driven image-sensor/processor combination.

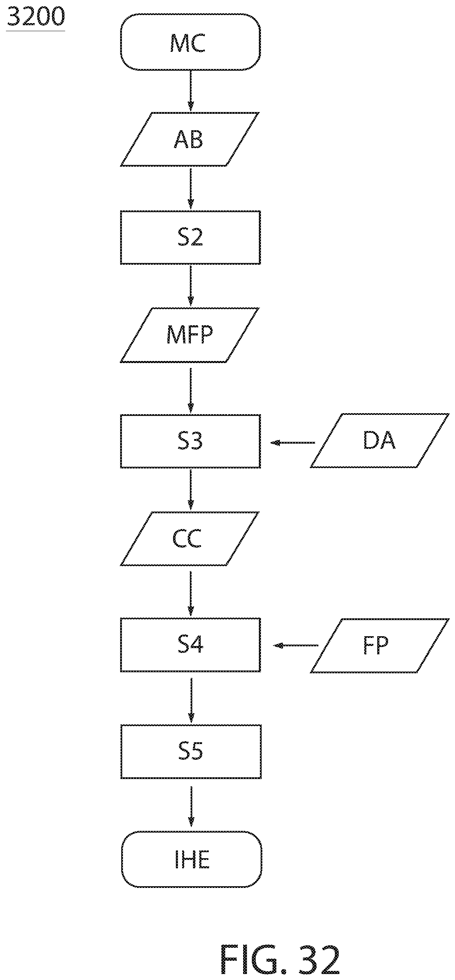

Figure 32 contains a flowchart **3200** illustrating a method for configuring MC a plurality of block structures of modulated features and base features intended to be engraved on a surface of a solid piece. As previously explained, each modulated feature and each base feature has respectively a three-dimensional modulated-feature profile and a three-dimensional base-feature profile, which enables to engrave each of the modulated features and each of the base features, each block structure comprises a corresponding code-block structure of transcribed data, and each block structure is a collection of modulated features and base features, configured to be spread over a spatially restricted part of the surface. The method comprises:
- creating **S2** each of the modulated features profiles **MFP** profiles by applying a corresponding modulation by means of a modulation of a modulation profile to one of the base features profiles, according to a symbol which transcribed a character of an alphabet **AB,** the alphabet being a set of characters, which are distinct objects of well-defined elementary data,
- transcribing S3 at least a first part of the data **DA** for a first code-block structure CC by means of the modulated-feature profiles,
- arranging **S4** the modulated features corresponding to the first code-block structure CC in at least a first block structure of the plurality of block structures, according to a first ordered map **FP,** the first ordered map being a first finite ordered set of positions of the modulated features of the first code-block structure, and
- configuring **S5** the modulated features in the first ordered map to constitute an aesthetic ensemble on the surface and render the respective symbols corresponding to the modulated features of the first code-block structure imperceptible to the human eye **(IHE)** for the intended engraving, but retrievable by means of a software-driven image-sensor/processor combination.

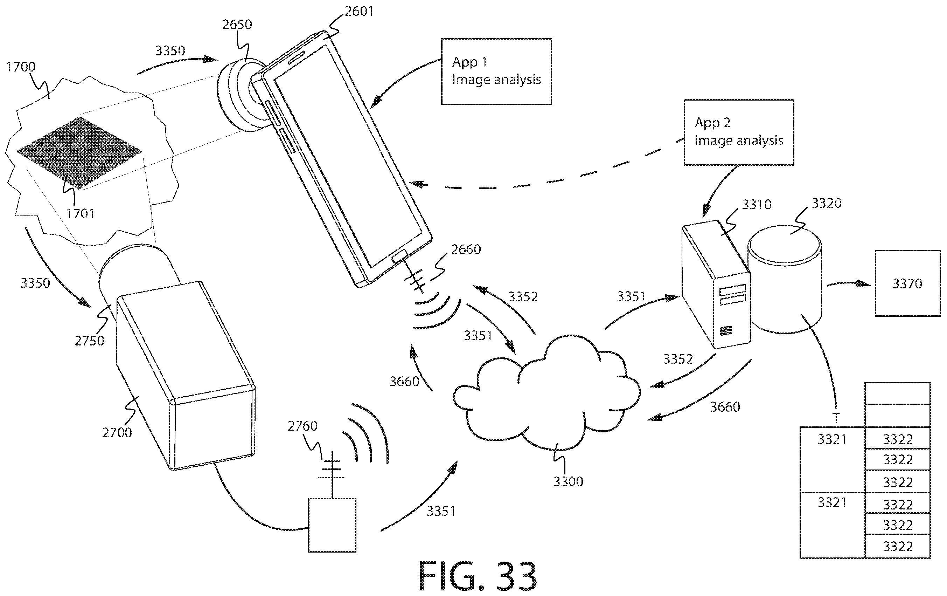

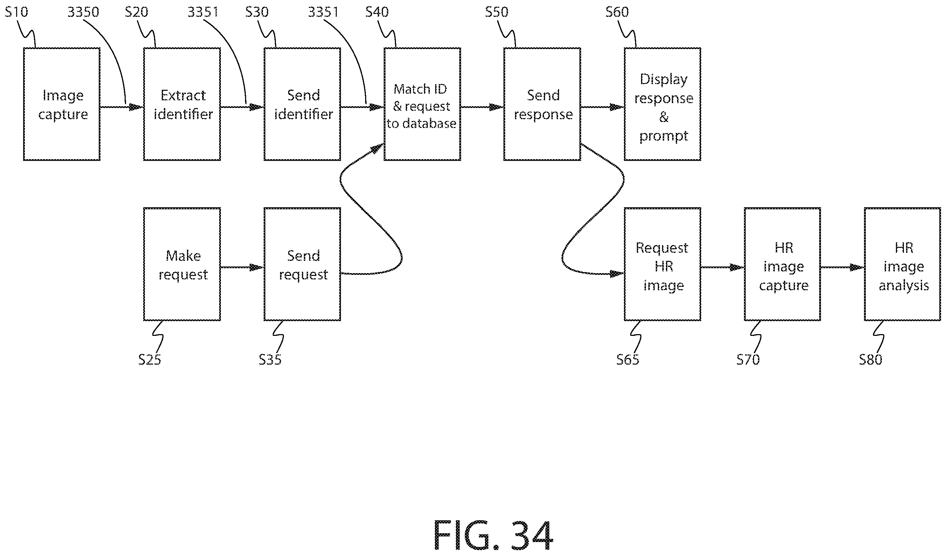

According to another aspect of the present invention, a system or a method is provided for capturing an image **3350** with a first data-processing device, for example a smartphone **2601,** from a part of a surface, element or component **1700,** part of a surface **1700** including a block structure **1701,** analyzing the image **3350** to extract an identifier, code or other information **3351** therefrom, and matching identifier **3351** with information from a database, after sending identifier or code **3351** to another second data-processing device, for example server **3310.** Figure 33 shows an exemplary schematic and simplified representation of such a system for reading, extracting, and matching an identifier or code **3351** stemming from a part of a surface **1700,** and Figure 34 shows a schematic representation of a corresponding method that can be performed on the system. The exemplary system shown includes a smartphone or tablet computer **2601,** a data communications network **3300,** a server and database **3310** and **3320,** respectively, and a camera **2700** for image capturing, preferably capable of providing a higher image quality than smartphone **2601.** As explained above with respect to Figure 17, part of a surface **1700** is hosting block structure **1701,** which in turn is embedding a code-block structure having information coded therein with modulated features in addition to the base features.

More specifically, the system can include a smartphone **2601** or other data-processing device having a camera that is equipped with an image sensor and optics or another type of data-processing device that is operatively connected to a camera or image sensor, for example but not limited to personal computer (PC), tablet, Macintosh computer (MAC), handheld camera reader, smart camera, or other portable data-processing device, the smartphone **2601** configured to operate an image capture and analysis application APP1 for capturing and analyzing captures images **3350** from the camera associated with smartphone **2601** for reading codes or identifiers **3351** from the captured image **3350.** For example, application APP1 can be installed and operated by user of smartphone **2601** having a graphical user interface (GUI) that in turn can use the camera application installed smartphone **2601,** and can include different types of image-processing software and image-processing algorithms, for example decode algorithms, image filtering, and pattern-matching algorithms, software for geometric transformations, these algorithms allowing to identify code or identifier **3351** from image **3350.** Moreover, smartphone **2601** includes a data communication interface **2660** and antenna, for example but not limited to a Bluetooth or Bluetooth LE interface, wireless local area network (WLAN) interface, global system for mobile communications (GSM) cellphone data interface, radio frequency (RF) communication, broadband cellular network interface such as but not limited to 3G, 4G, and 5G, optical data interface based for example on infrared signals, satellite-data based interface, data communication interface **2660** configured to communicate to and over a network **3300,** for example the internet or an intranet. It is also possible that at least some of the connections to network **3330** is wired, for example by local area network (LAN) connections. Network **3300** is accessible by data communication interface **2660** of smartphone **2601,** and is itself operably connected to a physical server, virtual server, cloud server or any other means of computation **3310** that has access to a database **3320.** Database **3320** can be a physical database **3320** that can be located at server computer **3310,** for example an external or internal hard drive, but can also be another remote server or a cloud-based database or network drive. Server **3310** is itself equipped with a data network interface to connect to network **3300,** and having all necessary data interfaces and communication protocols for communication data from and to network **3300.** Moreover, a memory space of database **3320** can store a table or data structure Twith information that is linked or otherwise in connection with identifier **3351,** for example data structures and information that is associated with a specific identifier or code **3351.** Not shown in Figure 34 but easily understandable for a person skilled in the art, the data transmission to and from network 3300 will in most circumstances be accomplished in an encrypted manner in order to protect the information exchange between a smartphone/tablet **2601** or a camera device **2700** and the server/database combination **3310/3320.**

For example, table or data structure T can include information **3322** that is linked to a query key **3321,** also referred to as linked data **3322,** and that is related to product or system that includes part of surface **1700,** for example information **3322** that includes manufacturing information of part of a surface **1700** that is associated to code **3351,** including but not limited to manufacturing date, manufacturing location, version information, technical data, data links to user manuals, construction plans, maintenance plans and schedules, compatibility information, information **3322** that includes data on foodstuff that are packaged to form part of a surface **1700** including but not limited to ingredients, country of origin information, location of origin information, expiration date of the food product, information on a product class, information **3322** that includes data on marketing and consumer information related to part of a surface **1700,** for example but not limited to hyperlinks or data to promotions, flyers, white papers, websites, product warnings, product classifications, coupons, audiovisual representations such as YouTube^{™} videos, animations, user manuals, Microsoft PowerPoint^{™} presentations, portable document format (PDF) documents, information **3322** that includes intellectual property information related to part of a surface **1700,** for example but not limited to data on patents, designs, trademarks, copyrights, open source software information, geographic indicators, information **3322** that includes data with pharmaceutical information, for example but not limited to pharmaceutical manuals, quality and dose information, dispensing information, warning information, information **3322** can also include further identification information related to part of surface **1700,** for example but not limited to owner information, serial numbers, address information, product, hardware or software version information, manufacturing history information, logistics tracking information.

Moreover, computing device **3310** can have an application software APP2 installed and operated thereon, application software APP2 managing the database **3320** and the table or data structure T, and configured to receive, process, and respond to request made by application software APP1. For example, application software APP2 can receive specific queries and requests from application software APP1 from smartphone **2601,** and can process and respond to these, by sending a response **3352** back to smartphone **2601** via network **3300,** for example by including data extracted from table or data structure T that is linked to the received identifier or code 3351. Application software APP2 can also be equipped with additional image processing software that allows receiving image data from smartphone **2601,** for example raw, pre-processed or compressed image data. In this respect, smartphone **2601** and APP1 can send to server **3310** and application software APP2 image data that has been captured by smartphone **2601** of block structure **1701** of part of a surface **1700.** For example, this can be done upon sending a request **3660** from APP2 to APP1 of the smartphone **2601.** This allows application software APP2 performing additional processing on the image data, for example one that is more complex that the one performed at application software APP1. In a variant, it is also possible that APP1 of smartphone **2601** directly accesses a gateway or an application programming interface (API) to access data of table or data structure T, and that no additional application software is present at server **3310** but only an application-specific interface, but that server **3310** acts as a data provider to smartphone **2601,** with APP1 accessing server **3310** for requesting data from table or data structure T. In this respect, it is possible that APP1 and APP2 are operated as one application on smartphone **2601.** Moreover, data communication with the sending of information on identifier or code **3351** and the responses **3352** with additional data sent from table or data structure T can be secured by different encryption and authentication schemes that are known in the field of safe message exchanges. Moreover, software application APP2 can further include data interfaces to other external applications **3370,** for example via an API, to access additional information from third parties that can relate or is otherwise linked to identifier or code **3351.** For example, a track and trace application **3370** can be accessed, that can provide for logistics and manufacturing information from a third party, that can be thereafter sent back to smartphone **2601** on the GUI of the software application APP1.

The system can further include a camera **2700** for image capturing, preferably capable of providing a higher image quality than smartphone **2601** that can also be operatively connected to network **3300,** for example via a network interface device **2760.** Camera **2700** can be a machine vision inspection camera with appropriate optics and illumination for capturing sufficient detail of block structure **1701** of part of a surface **1700,** and connected to a frame grabber or other fast data-transfer interface such as but not limited to FireWire, Universal Serial Bus (USB), Ethernet, or a wireless interface, to a computing device having a data-communication interface, for example a network interface **2760** for network **3300.** Network interface device **2760** could itself be a computer such as a PC or a Macintosh computer that is operatively connected to network **3300** and to camera **2700.** As an example, camera **2700** can be equipped with an application-specific optics or lenses **2750** for capturing an image **3350** of block structure **1701** of part of surface **1700,** for example a macro lens, microscope lens, or other lens. Preferably, camera **2700** and optics **2750** are such that they that allow capturing an image of substantially better and more adapted image quality than camera of smartphone **2601** alone. In addition or alternatively to camera **2700,** it is possible that smartphone **2601** is equipped with an additional optics **2650** that allows improving and/or adapting the image capture of block structure **1701** of part of a surface **1700,** for example a specific macro lens that can be clipped, slid on, or otherwise operatively attached to smartphone **2601.** Furthermore, such optics **2650** may also be used to de-warp or flatten the acquired image according to specific surface forms such as cylinders or other, well defined geometries of objects.

With respect to a specific example and application, it would be possible to mark a pharmaceutical or drug product with the non-perceptible codes or identifiers **3351** within block structure **1701,** and these codes or identifiers could be used by a user or patient to see if the pharmaceutical product received matches with his electronic prescription and/or his user profile. For example, it would be possible that code or identifier **3351** is provided with block structure **1701** that is part of a blister packaging **2900** of, e.g., pharmaceutical, reduced-risk smoking, or any other blister-packed products **2902,** it would be possible to link identifier **3351** to an electronic prescription or e-prescription, e-Rx for the pharmaceutical product that has been prescribed to a user. In addition, server **3310** could have access or pre-stores a profile of the user, for example via a secured access to an external application **3370,** including but not limited to gender, date of birth, age, weight, pre-existing health conditions, size, body-mass-index, medication history, allergies. For example, a blister packaging for a pharmaceutical product could be sealed and covered by a lidding material that is made of metalized film or metallic film, or a laminate, as shown in Figure 29. This lidding material could have marketing information printed thereon, but at the same time the lidding material could be embossed by a decorative pattern having one or more identifiers or codes **3351** embedded therein. As an example, each blister **2900** for each individual pill, dose or liquid-filled pod **2902** of blister packaging **2900** could have a separate and distinct code embossed in the cover formed by the lidding material that would appear as a separate block structure **1701** on top of each blister **2902.**

For example, a part of a surface **1700** is shown having a surface with block structure **1701** provided thereon, for example a structured surface or an embossed material, having the base features and the modulated features. For example, part of a surface **1700** could be a component for a jewelry or watch product having an etched, engraved or embossed surface for block structure **1701,** an embossed packaging material, for example a lining or other packaging foil for tobacco products, packing material for food products such as chocolate or other foodstuff and perishable goods, a capsule or cartridge for an e-cigarette, a packing material for a parcel that is used for local or global shipment with a hidden code provided by block structure **1701.** But part of a surface **1700** is not limited to these examples. As an example, block structure **1701** can be checkerboard pattern, for instance an n x n matrix (not shown) having the checkerboard map of base features, in other words alternating embossed bumps and sinks as the base features, but also having some of the individual checkerboard elements offset from a center position as the modulated features, for example with an xy-offset from a center position of each square-shaped element of the grid formed by the matrix to the left upper corner, left lower corner, right upper corner, and right lower corner, thereby allowing to encode information. For example the offsets are in the micrometer or sub-millimeter range, e.g., a range between 5 µm to 250 µm, and are therefore not visible to a human eye without additional optical aid, but the checkerboard pattern can be part of an aesthetic or decorative embossing, and therefore visible by a human eye as a shading or a surface texture, for example a surface structuration or part of a logo.

Figure 34 shows an exemplary and simplified flowchart of a method that can be performed by the system. The method allows reading and extracting one or more identifiers **3351** from block structure **1701** of part of a surface **1700,** by capturing image information, and thereafter to find and to process information and data that is linked to the one or more identifiers **3351** with a database, table, or data structure T. The method can first include a step **S10** of capturing image data **3350** of an image of block structure **1701** of part of a surface **1700,** for example by using APP1 of smartphone **2601,** and this can be done by the user operating an icon or button of the GUI of APP1. Next, in a step **S20,** the APP1 of smartphone 2601 can process the received image data **3350** to extract an identifier or code **3351.** Thereafter, identifier or code **3351** can be sent with a step **S30** to server **3310** and application software APP2, via network **3300,** or with a direct communication link between smartphone **2601** and server **3310.** This can be done by a standard messaging protocol or a specific data packet transmittal with a customized protocol, and this step can also include an encryption scheme for the safe transmission. Next, upon reception of identifier **3351** with a message or data packet at server **3310,** and the optional decryption of the date of the message or data packet, server **3310** can perform a step **S40,** where a database having a table or data structure T is queried for data that is linked to identifier or code **3351,** to access linked data **3322.** Next, server **3310** can perform a step **S50** that sends a response back to smartphone **2601,** for example a message or a data packet including the linked data **3322.** This step again can include an encryption step that is performed on the data before being sent. In a next step **S60,** at smartphone **2601,** the message or data packet can be received, optionally decrypted, and the linked data can be displayed to the GUI of APP1 of smartphone **2601.** In this step, GUI of APP1 can also create a user prompt in the form of a notification message or notification screen to get the attention of the user or operator of smartphone **2601.**

Next, at the server **3310,** application software APP2 can be further configured to perform a step **S65** upon receiving identifier or code **3351,** and after querying the database or table T. This step **S65** can be triggered if information from the database or table T indicates that the product or part of a surface **1700** with block structure **1701** is prone to unauthorized copying or counterfeiting. This could be the case if part of a surface **1700** is a cigarette package that is counterfeited often for gray or black markets. For example, a data entry of table T could be linked to identifier or code **3351,** to indicate that the part of a surface **1700** under inspection or investigation is likely to be a counterfeited or copied product. This data entry could be examined by APP2 to trigger step **S65** that sends a request back to smartphone **2601** and APP1 to capture another image from block structure **1701,** but with a higher image quality, with the goal to perform a deep or forensic examination of block structure **1701.** For example, this request could include, but is not limited to, the instruction for capturing a higher-resolution (HR) image, request the capturing of an image with a higher contrast or high dynamic range (HDR), the request to change the illumination to a different or stronger illumination.

Upon receiving the request at the smartphone **2601** with APP1, the GUI could prompt or otherwise inform the user of this request, for example with a GUI window informing the user with instructions to capture an image of better quality. Step **S70** can then be performed where image date of an image of increased quality is captured by user, for example by the use of a separate camera **2700,** or by the use of additional optics **2650** that are clipped onto smart phone **2601.** Thereafter, improved image data can be sent back to server **3310** for further analysis by APP2, for example with a step **S80,** for deep or forensic authentication of the image data of block structure **1701.** The involved image-processing algorithms of S80 may include highly complex and advanced methods, which are not real-time applications anymore due to their level of complexity. Therefore, in intermediate steps, responses **3352** may include message to the user to be patient and wait for the result.

Another step of the method is step **S25,** where a request for database querying and a step of sending the request to server **3310** is done by APP1 of smartphone **2601,** for example via the graphical user interface by the user or automatically by the preset mode of the application, e.g., depending on the user function and depending on access rights. In this respect, the capturing of the image data **3350** with step **S10** and the sending of the identifier is done separately and only upon making a request by steps **S25** and **S35,** server **3310** will return database information, with linked data **3322** back to smartphone **2601.**

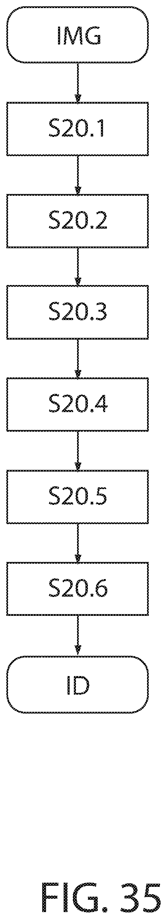

Figure 35 shows an exemplary flowchart of the steps that can be performed as substeps of step **S20,** in which APP1 of smartphone **2601** can process the received image data **3350** to extract an identifier or code **3351.** Within this step, with a step **S20.1,** the image **3350** is subjected to pre-processing to provide for an image of better quality and format for feature detection or pattern matching purposes, to obtain a filtered or calibrated image. For example, this step **S20.1** can include but is not limited to a step of removing artifacts by different types of filters, a noise-removal step, for example by median or averaging filters, fixed-pattern noise removal, a contrast-enhancing step for example by a moving-histogram equalization (MHE) algorithm, an illumination-adaption step to increase or decrease pixel intensity, an illumination non-uniformity correction step with linear or non-linear corrections, a geometric distortion correction step, motion smear compensation algorithms, digital zoom-in or zoom-out normalization processing.

Next, the filtered or calibrated image can be subjected to a grid extraction or segmentation algorithm with step **S20.2.** In this step, the filtered or calibrated image is subject to a data-processing step that can overlay a grid over the filtered image, which will serve as a reference coordinate system for further data processing on the image. Furthermore, the extracted grid will provide the basis for determining the feature positions on a map, which will be used in later steps **S20.3, S20.4,** etc. Typical grid-extraction algorithms contain Fast Fourier Transforms (FFTs) on the global scale as well as adaptive search and correlation algorithms on the local scale. The map provided in this step can be based on different types of coordinate basis.

Thereafter, the segmented image that results from step **S20.2** can be subject to a (code-block) synchronization step in a step **S20.3,** in which the code-block synchronization pattern, marker, target, object point is identified, detected and located, so that a reference for detecting the code or identifier **3351** in the code-block structure is possible. This can be done by pattern matching or feature-detection algorithms of different kinds, for example by correlation techniques, machine learning, optical character-recognition (OCR) techniques, supervised or non-supervised training.

Next, a step **S20.4** is performed where the different symbols that represent the modulated features of block structures **1701** are detected and extracted, in reference to a position or location of the code-block synchronization pattern. This can be done by matching edges, corners, interest points, blobs, region of interests with a reference-image data set of modulated features of block structures **1701.** It is also possible that this step include a step of feature extraction. Moreover, it is also possible that this step **S20.4** includes the use of artificial intelligence, for example, a convolutional neural network and deep learning of model data sets for detecting the features, being the modulated features of block structures **1701.** This can be done by having a dataset of labelled images with all the different modulated features of the block structures **1701.** It is to be noted that the output of this feature-detection step is soft information, i.e., non-binary information or probability information, in most of the cases, in order to benefit from additional coding gain in the subsequent decoding step **S20.6.**

Thereafter a step **S20.5** is performed, where the descrambling of the information contained in the code-block structure is done according to the arrangement of the modulated features in the ordered map. This step will bring the extracted (soft-) symbol information into the linear order required by the subsequent decoding step **S20.6.**

Thereafter, a step **S20.6** is performed where the identifier or code 3351 is decoded from the different detected (soft-) symbols. Since redundant information was added during the encoding step, the decoding is done using standard algorithms for forward error-correcting (FEC) codes and will use the linearly arranged soft-symbol information as its input together with the knowledge of the exact structure of the code. Typical FEC codes that are known for high-performance error-correction properties include, but are not limited to, Turbo codes or Polar codes, etc. In particular, Polar codes are well suited for the task at hand as they are easily constructed and benefit from suitable hardware implementations as is seen in the latest 5G data-communication standards.

According to yet another aspect, it is possible that the captured image is linked or otherwise associated with a unique and secret code or identifier, for example by using the subscriber identification module (SIM) of the smartphone **2601** for generating a code, or by using an cryptographic algorithm that can extract a code or otherwise protected information from the captured image **3350,** so that the image can be authenticated at a later stage as being the originally captured image. This unique code or identifier can be sent from APP1 to APP2 with step **S30** together with identifier **3350,** and thereby APP2 will have authentication information for the captured image **3350,** without initially having access to the captured image data 3350 itself at APP2. For example, to generate the secret code, a hash or checksum code could be generated from image data, and also be based on a time of capture and location data of capture as is usually found in the EXIF data of the image, together with another unique code that can be generated by the SIM card or any other type of token able to produce such a unique, secure information element. Once image data **3350** is sent to APP2 of the second data-processing device, it would make it possible to authenticate the received image of step **S65, S70**, so that the later received image for deep or forensic authentication could also be authenticated as being the image **3350** at APP2 from which the original code has been extracted. This allows the APP2 to verify whether the received image data **3350** is actually from the same image that was captured initially by step **S10.**

## Claims

1. An engraved solid piece carrying data comprising specific information on a surface of the engraved solid piece,
- the surface being covered by a plurality of block structures, comprising at least a first block structure,
- each block structure being a spatially restricted collection of modulated features and base features, which are spread over the surface of the engraved solid piece,
- each modulated feature and each base feature having respectively a three-dimensional modulated-feature profile and a three-dimensional base-feature profile,
- each of the modulated-feature profiles being the result of applying a corresponding modulation to one of the three-dimensional base-feature profiles, according to a specific corresponding information,
- each modulated feature further being a symbol, which is a transcription of a character of an alphabet,
- the alphabet being a collection of characters, which are distinct objects of well-defined elementary data,
- each of the base features being an engraved elementary three-dimensional topographical element of the surface,
- each of the modulated features being an engraved three-dimensional topographical element of the surface,
- at least a part of the data being transcribed by a code-block structure of modulated features, the code-block structure thereby constituting at least a part of a block structure corresponding to the at least one part of the data,
the modulated features of the first block structure being arranged according to a first ordered map, the first ordered map comprising at least a first finite ordered set of first positions of the modulated features of a first code-block structure on the surface, the first block structure corresponding to a first part of the data, and
the first ordered map further being configured to arrange the modulated features of the first block structure to constitute an aesthetic ensemble on the surface and render the respective symbols corresponding to the modulated features of the first code-block structure imperceptible to the human eye, but retrievable by means of a software-driven image-sensor/processor combination, wherein for each modulated feature, a two-dimensional integral over the entire feature of the angle difference between the normal of the modulated feature and that of the base feature is below a threshold in human vision capability, and wherein the engraved solid piece further comprises at least a further first ordered map, the further first ordered map being a further finite set of further positions of the modulated features on the surface, each further position being a result of a determined translation of a corresponding first position of the first ordered map, the further first ordered map being configured to define a further first block structure that is non-overlapping with the first block structure defined by the first ordered map, and either adjacent to the first block structure; separated from the first block structure by a determined distance; or in case there are a plurality of further first ordered maps, separated from each other in a regular manner in 2 dimensions.

2. The engraved solid piece of claim 1, further comprising on its surface
- an at least one second block structure being a second spatially restricted collection of exclusively a plurality of at least one of the base features, and
- the base features of the at least one second block structure being arranged on the solid surface according to a second map, the second map being a second finite set of positions of the base features on the surface,
the second map further enabling its base features to be arranged to constitute an aesthetic ensemble on the surface.

3. The engraved solid piece of any one of claims 1-2, wherein the engraved solid piece:
- has a cylindrical symmetry, and
- is configured as a tool for a transfer of the modulated features and/or the base features into a substrate,
the transfer being any one of the following:
shaping, printing, molding, crafting, pressing, and embossing onto or into the substrate, of the modulated features and/or the base features.

4. The engraved solid piece of any one of claims 1-2, wherein the engraved solid piece is
- configured to be used as a forming tool, for a transfer of the modulated features and/or the base features into a substrate,
the transfer being any one of the following:
printing, molding, crafting, pressing, and embossing onto the substrate, of the engraved modulated features and/or the engraved base features.

5. The engraved solid piece of claim 2,
further comprising a plurality of first ordered maps and second maps,
wherein the plurality of first ordered maps and second maps are arranged along at least a regular grid.

6. The engraved solid piece of claim 2,
further comprising a plurality of first ordered maps and second maps,
wherein the plurality of first ordered maps and second maps are arranged along at least a randomized grid.

7. The engraved solid piece of claim 2,
further comprising a plurality of first ordered maps and second maps, wherein the plurality of first ordered maps and second maps are
- configured to carry first parts of data and constitute at least one aesthetic ensemble; and
- arranged such that the positions of the modulated features of the carried first parts of data is imperceptible to the human eye, but retrievable only by means of a software-driven image-sensor/processor combination.

8. The engraved solid piece of claim 1, further carrying a third part of data on the surface corresponding to a third map,
the third map being a third finite set of positions of the modulated features on the surface, the third map being configured to define a third block structure that is non-overlapping with the first block structure defined by the first map, and any one of the following
- adjacent to the first block structure;
- separated from the first block structure by a determined distance; or
- in case there are a plurality of third maps, separated from each other and from the first block structure.

9. A method for manufacturing (MM) an engraved solid piece (SP) configured for carrying data (DA) comprising specific information, on a surface of the engraved solid piece, the method comprising
engraving (S1) on the surface a plurality of block structures (BS), comprising at least a first block structure, whereby
- each block structure is a spatially restricted collection of modulated features and base features, which are spread over the surface of the engraved solid piece,
- each modulated feature and each base feature having respectively a three-dimensional modulated-feature profile and a three-dimensional base-feature profile,
- each of the modulated-feature profiles being the result of applying a corresponding modulation to one of the three-dimensional base-feature profiles, according to the specific information,
- each modulated feature further being a symbol, which is a transcription of a character of an alphabet,
- the alphabet being a set of characters, which are distinct objects of a well-defined elementary data,
- each of the base features being an engraved elementary three-dimensional topographical element of the surface,
- each of the modulated features being an engraved three-dimensional topographical element of the surface,
- at least a part of the data (DA) being transcribed by a code-block structure of modulated features, the code-block structure thereby constituting at least a part of a block structure corresponding to the at least one part of the data (DA),
whereby the modulated features of the first block structure (BS) are arranged according to a first ordered map, the first ordered map comprising at least a first finite ordered set of first positions of the modulated features of a first code-block structure on the surface, the first block structure corresponding to a first part of the data, and
whereby the first ordered map further is configured to arrange the modulated features of the first block structure (BS) to constitute an aesthetic ensemble on the surface and render the respective symbols corresponding to the modulated features of the first code-block structure imperceptible to the human eye, but retrievable by means of a software-driven image-sensor/processor combination.

10. The method for manufacturing of claim 9, wherein the step of engraving (S1) on the surface a plurality of block structures is executed by any one of the following:
- precision milling,
- laser ablation,
- chemical engraving,
- plasma etching, and
- stamping.

11. The method of claim 9, further comprising configuring (MC) the plurality of block structures of modulated features and base features intended to be engraved (S1) on the surface of the solid piece,
the method comprising:
- creating (S2) each of the modulated features profiles (MFP) by applying a corresponding modulation by means of a modulator feature profile to one of the base features profiles, according to a symbol, which is a transcription of a character of an alphabet (AB), the alphabet being a collection of characters, which are distinct objects of well-defined elementary data,
- transcribing (S3) at least a first part of the data (DA) for a first code-block structure (CC) by means of the modulated-feature profiles,
- arranging (S4) the modulated features corresponding to the first code-block structure (CC) in at least a first block structure of the plurality of block structures, according to a first ordered map (FP), the first ordered map being a first finite set of positions of the modulated features of the first code-block structure, and
- configuring (S5) the modulated features in the first ordered map to constitute an aesthetic ensemble on the surface and render the respective symbols corresponding to the modulated features of the first code-block structure imperceptible to the human eye (IHE) for the intended engraving, but retrievable only by means of a software-driven image-sensor/processor combination.

## Patentansprüche

1. Graviertes Vollmaterialstück, das Daten trägt, umfassend spezifische Informationen auf einer Oberfläche des gravierten Vollmaterialstücks,
- wobei die Oberfläche von einer Vielzahl von Blockstrukturen bedeckt ist, umfassend mindestens eine erste Blockstruktur,
- wobei jede Blockstruktur eine räumlich begrenzte Sammlung von modulierten Merkmalen und Grundmerkmalen ist, die über die Oberfläche des gravierten Vollmaterialstücks verteilt sind;
- wobei jedes modulierte Merkmal und jedes Grundmerkmal ein dreidimensionales moduliertes Merkmalsprofil beziehungsweise ein dreidimensionales Grundmerkmalsprofil aufweisen,
- wobei jedes der modulierten Merkmalsprofile das Ergebnis des Anwendens einer entsprechenden Modulation auf eines der dreidimensionalen Grundmerkmalsprofile gemäß einer spezifischen entsprechenden Information ist,
- wobei jedes modulierte Merkmal ferner ein Symbol ist, das eine Transkription eines Buchstabens eines Alphabets ist;
- wobei das Alphabet eine Sammlung von Zeichen ist, die unterschiedliche Objekte gut definierter Elementardaten sind;
- wobei jedes der Grundmerkmale ein graviertes, elementares, dreidimensionales topographisches Element der Oberfläche ist,
- wobei jedes der modulierten Merkmale ein graviertes, dreidimensionales topographisches Element der Oberfläche ist,
- wobei mindestens ein Teil der Daten durch eine Codeblockstruktur modulierter Merkmale transkribiert wird, wobei die Codeblockstruktur somit mindestens einen Teil einer Blockstruktur ausbildet, die dem mindestens einen Teil der Daten entspricht,
wobei die modulierten Merkmale der ersten Blockstruktur gemäß einer ersten geordneten Abbildung angeordnet sind, wobei die erste geordnete Abbildung mindestens einen ersten endlichen geordneten Satz von ersten Positionen der modulierten Merkmale einer ersten Codeblockstruktur auf der Oberfläche umfasst, wobei die erste Blockstruktur einem ersten Teil der Daten entspricht, und
wobei die erste geordnete Abbildung ferner dazu ausgelegt ist, die modulierten Merkmale der ersten Blockstruktur anzuordnen, um ein ästhetisches Ensemble auf der Oberfläche auszubilden und die jeweiligen Symbole, die den modulierten Merkmalen der ersten Codeblockstruktur entsprechen, für das menschliche Auge nicht wahrnehmbar, aber mittels einer softwaregesteuerten Bildsensor/Prozessor-Kombination abrufbar zu machen, wobei für jedes modulierte Merkmal ein zweidimensionales Integral über das gesamte Merkmal der Winkeldifferenz zwischen der Normalen des modulierten Merkmals und der des Grundmerkmals unter einer Schwelle der menschlichen Sehfähigkeit liegt, und wobei das gravierte Vollmaterialstück ferner mindestens eine weitere erste geordnete Abbildung umfasst, wobei die weitere erste geordnete Abbildung ein weiterer endlicher Satz weiterer Positionen der modulierten Merkmale auf der Oberfläche ist, wobei jede weitere Position ein Ergebnis einer bestimmten Translation einer entsprechenden ersten Position der ersten geordneten Abbildung ist, wobei die weitere erste geordnete Abbildung dazu ausgelegt ist, eine weitere erste Blockstruktur zu definieren, die nicht mit der ersten Blockstruktur überlappt, die durch die erste geordnete Abbildung definiert ist, und entweder angrenzend an die erste Blockstruktur; von der ersten Blockstruktur um einen bestimmten Abstand getrennt sind; oder falls eine Vielzahl von weiteren ersten geordneten Abbildungen vorliegt, in einer regelmäßigen Weise in 2 Dimensionen voneinander getrennt sind.

2. Graviertes Vollmaterialstück nach Anspruch 1, ferner auf seiner Oberfläche umfassend
- mindestens eine zweite Blockstruktur, die eine zweite räumlich beschränkte Sammlung ausschließlich einer Vielzahl mindestens eines der Grundmerkmale ist, und
- wobei die Grundmerkmale der mindestens einen zweiten Blockstruktur auf der festen Oberfläche gemäß einer zweiten Abbildung angeordnet sind, wobei die zweite Abbildung ein zweiter endlicher Satz von Positionen der Grundmerkmale auf der Oberfläche ist,
wobei die zweite Abbildung es ferner ermöglicht, ihre Grundmerkmale so anzuordnen, dass sie ein ästhetisches Ensemble auf der Oberfläche ausbilden.

3. Graviertes Vollmaterialstück nach einem der Ansprüche 1-2, wobei das gravierte Vollmaterialstück:
- eine zylindrische Symmetrie aufweist, und
- ausgelegt ist als Werkzeug für eine Übertragung der modulierten Merkmale und/oder der Grundmerkmale in ein Substrat,
wobei es sich bei der Übertragung um eine der folgenden Optionen handelt:
Formgeben, Drucken, Formen, Fertigen, Pressen, und Prägen auf oder in das Substrat, der modulierten Merkmale und/oder der Grundmerkmale.

4. Graviertes Vollmaterialstück nach einem der Ansprüche 1-2, wobei das gravierte Vollmaterialstück
- ausgelegt ist zur Verwendung als ein Formgebungswerkzeug für eine Übertragung der modulierten Merkmale und/oder der Grundmerkmale in ein Substrat,
wobei es sich bei der Übertragung um eine der folgenden Optionen handelt:
Drucken, Formen, Fertigen, Pressen, und Prägen auf das Substrat, der gravierten modulierten Merkmale und/oder der gravierten Grundmerkmale.

5. Graviertes Vollmaterialstück nach Anspruch 2,
ferner umfassend eine Vielzahl von ersten geordneten Abbildungen und zweiten Abbildungen,
wobei die Vielzahl von ersten geordneten Abbildungen und zweiten Abbildungen entlang mindestens eines regulären Gitters angeordnet sind.

6. Graviertes Vollmaterialstück nach Anspruch 2,
ferner umfassend eine Vielzahl von ersten geordneten Abbildungen und zweiten Abbildungen,
wobei die Vielzahl von ersten geordneten Abbildungen und zweiten Abbildungen entlang mindestens eines randomisierten Gitters angeordnet ist.

7. Graviertes Vollmaterialstück nach Anspruch 2,
ferner umfassend eine Vielzahl von ersten geordneten Abbildungen und zweiten Abbildungen, wobei die Vielzahl von ersten geordneten Abbildungen und zweiten Abbildungen
- dazu ausgelegt ist, erste Teile von Daten zu tragen und mindestens ein ästhetisches Ensemble auszubilden; und
- so angeordnet ist, dass die Positionen der modulierten Merkmale der getragenen ersten Datenanteile für das menschliche Auge nicht wahrnehmbar, aber nur mittels einer softwaregesteuerten Bildsensor-Prozessor-Kombination abrufbar sind.

8. Graviertes Vollmaterialstück nach Anspruch 1, das ferner einen dritten Teil von Daten auf der Oberfläche trägt, der einer dritten Abbildung entspricht,
wobei die dritte Abbildung ein dritter endlicher Satz von Positionen der modulierten Merkmale auf der Oberfläche ist, wobei die dritte Abbildung dazu ausgelegt ist, eine dritte Blockstruktur zu definieren, die nicht mit der ersten Blockstruktur überlappt, die durch die erste Abbildung definiert ist, und eines der Folgenden ist:
- angrenzend an die erste Blockstruktur;
- getrennt von der ersten Blockstruktur um einen bestimmten Abstand; oder,
- falls eine Vielzahl von dritten Abbildungen vorliegt, voneinander und von der ersten Blockstruktur getrennt.

9. Verfahren zum Herstellen (MM) eines gravierten Vollmaterialstücks (SP), ausgelegt zum Tragen von Daten (DA), umfassend spezifische Informationen, auf einer Oberfläche des gravierten Vollmaterialstücks, das Verfahren umfassend
Gravieren (S1) einer Vielzahl von Blockstrukturen (BS), umfassend mindestens eine erste Blockstruktur, auf der Oberfläche, wobei
- jede Blockstruktur eine räumlich begrenzte Sammlung von modulierten Merkmalen und Grundmerkmalen ist, die über die Oberfläche des gravierten Vollmaterialstücks verteilt sind;
- wobei jedes modulierte Merkmal und jedes Grundmerkmal ein dreidimensionales moduliertes Merkmalsprofil beziehungsweise ein dreidimensionales Grundmerkmalsprofil aufweisen,
- jedes der modulierten Merkmalsprofile das Ergebnis des Anwendens einer entsprechenden Modulation auf eines der dreidimensionalen Grundmerkmalsprofile gemäß der spezifischen Information ist,
- wobei jedes modulierte Merkmal ferner ein Symbol ist, das eine Transkription eines Buchstabens eines Alphabets ist;
- das Alphabet eine Sammlung von Zeichen ist, die unterschiedliche Objekte gut definierter Elementardaten sind;
- wobei jedes der Grundmerkmale ein graviertes, elementares, dreidimensionales topographisches Element der Oberfläche ist,
- wobei jedes der modulierten Merkmale ein graviertes, dreidimensionales topographisches Element der Oberfläche ist,
- mindestens ein Teil der Daten (DA) durch eine Codeblockstruktur modulierter Merkmale transkribiert wird, wobei die Codeblockstruktur somit mindestens einen Teil einer Blockstruktur ausbildet, die dem mindestens einen Teil der Daten (DA) entspricht,
wobei die modulierten Merkmale der ersten Blockstruktur (BS) gemäß einer ersten geordneten Abbildung angeordnet sind, wobei die erste geordnete Abbildung mindestens einen ersten endlichen geordneten Satz von ersten Positionen der modulierten Merkmale einer ersten Codeblockstruktur auf der Oberfläche umfasst, wobei die erste Blockstruktur einem ersten Teil der Daten entspricht, und
wobei die erste geordnete Abbildung ferner dazu ausgelegt ist, die modulierten Merkmale der ersten Blockstruktur (BS) so anzuordnen, dass sie ein ästhetisches Ensemble auf der Oberfläche ausbilden und die jeweiligen Symbole, die den modulierten Merkmalen der ersten Codeblockstruktur entsprechen, für das menschliche Auge nicht wahrnehmbar, aber mittels einer softwaregesteuerten Bildsensor/Prozessorkombination abrufbar zu machen.

10. Verfahren zum Herstellen nach Anspruch 9, wobei der Schritt des Gravierens (S1) einer Vielzahl von Blockstrukturen auf der Oberfläche durch eines der Folgenden ausgeführt wird:
- Präzisionsfräsen,
- Laserablation,
- chemisches Gravieren,
- Plasmaätzen, und
- Stanzen.

11. Verfahren nach Anspruch 9, ferner umfassend Konfigurieren (MC) der Vielzahl von Blockstrukturen von modulierten Merkmalen und Grundmerkmalen, die dazu bestimmt sind, auf der Oberfläche des Vollmaterialstücks graviert (S1) zu werden,
das Verfahren umfassend:
- Erzeugen (S2) jedes der modulierten Merkmalsprofile (MFP) durch Anwenden einer entsprechenden Modulation mittels eines Modulatormerkmalsprofils auf eines der Grundmerkmalsprofile gemäß einem Symbol, das eine Transkription eines Buchstabens eines Alphabets (AB) ist, wobei das Alphabet eine Sammlung von Zeichen ist, die unterschiedliche Objekte gut definierter Elementardaten sind;
- Transkribieren (S3) mindestens eines ersten Teils der Daten (DA) für eine erste Codeblockstruktur (CC) mittels der modulierten Merkmalsprofile,
- Anordnen (S4) der modulierten Merkmale, die der ersten Codeblockstruktur (CC) entsprechen, in mindestens einer ersten Blockstruktur der Vielzahl von Blockstrukturen gemäß einer ersten geordneten Abbildung (FP), wobei die erste geordnete Abbildung ein erster endlicher Satz von Positionen der modulierten Merkmale der ersten Codeblockstruktur ist, und
- Konfigurieren (S5) der modulierten Merkmale in der ersten geordneten Abbildung, um ein ästhetisches Ensemble auf der Oberfläche auszubilden und die jeweiligen Symbole, die den modulierten Merkmalen der ersten Codeblockstruktur entsprechen, für das menschliche Auge nicht wahrnehmbar (IHE) für die vorgesehene Gravierung, aber nur mittels einer softwaregesteuerten Bildsensor/Prozessorkombination abrufbar zu machen.

## Revendications

1. Pièce solide gravée portant des données comprenant des informations spécifiques sur une surface de la pièce solide gravée,
- la surface étant recouverte d'une pluralité de structures de bloc, comprenant au moins une première structure de bloc,
- chaque structure de bloc étant une collection spatialement restreinte de caractéristiques modulées et de caractéristiques de base, qui sont réparties sur la surface de la pièce solide gravée,
- chaque caractéristique modulée et chaque caractéristique de base ayant respectivement un profil tridimensionnel de caractéristique modulée et un profil tridimensionnel de caractéristique de base,
- chacun des profils de caractéristique modulée étant le résultat de l'application d'une modulation correspondante à un des profils tridimensionnels de caractéristique de base, selon des informations spécifiques correspondantes,
- chaque caractéristique modulée étant en outre un symbole, qui est une transcription d'un caractère d'un alphabet,
- l'alphabet étant une collection de caractères, qui sont des objets distincts de données élémentaires bien définies,
- chacune des caractéristiques de base étant un élément topographique tridimensionnel élémentaire gravé de la surface,
- chacune des caractéristiques modulées étant un élément topographique tridimensionnel gravé de la surface,
- au moins une partie des données étant transcrite par une structure de bloc de code de caractéristiques modulées, la structure de bloc de code constituant ainsi au moins une partie d'une structure de bloc correspondant à l'au moins une partie des données,
les caractéristiques modulées de la première structure de bloc étant agencées selon une première carte ordonnée, la première carte ordonnée comprenant au moins un premier ensemble ordonné fini de premières positions des caractéristiques modulées d'une première structure de bloc de code sur la surface, la première structure de bloc correspondant à une première partie des données, et la première carte ordonnée étant en outre configurée pour agencer les caractéristiques modulées de la première structure de bloc pour constituer un ensemble esthétique sur la surface et rendre imperceptibles à l'œil humain les symboles respectifs correspondant aux caractéristiques modulées de la première structure de bloc de code, mais pouvant être extraits au moyen d'une combinaison de capteur/processeur d'image commandée par logiciel, une intégrale bidimensionnelle, sur toute la caractéristique, de la différence d'angle entre la normale de la caractéristique modulée et celle de la caractéristique de base étant, pour chaque caractéristique modulée, inférieure à un seuil de capacité visuelle humaine, et la pièce solide gravée comprenant en outre au moins une première carte ordonnée supplémentaire, la première carte ordonnée supplémentaire étant un ensemble fini supplémentaire de positions supplémentaires des caractéristiques modulées sur la surface, chaque position supplémentaire étant un résultat d'une translation déterminée d'une première position correspondante de la première carte ordonnée, la première carte ordonnée supplémentaire étant configurée pour définir une première structure de bloc supplémentaire qui ne chevauche pas la première structure de bloc définie par la première carte ordonnée, et soit adjacente à la première structure de bloc ; soit séparée de la première structure de bloc par une distance déterminée ; soit, dans le cas où il existe plusieurs premières cartes ordonnées supplémentaires, séparées les unes des autres de manière régulière en 2 dimensions.

2. Pièce solide gravée selon la revendication 1, comprenant en outre sur sa surface
- au moins une deuxième structure de bloc qui est une deuxième collection spatialement restreinte constituée exclusivement d'une pluralité d'au moins une des caractéristiques de base, et
- les caractéristiques de base de l'au moins une deuxième structure de bloc étant agencées sur la surface solide selon une deuxième carte, la deuxième carte étant un deuxième ensemble fini de positions des caractéristiques de base sur la surface,
la deuxième carte permettant en outre d'agencer ses caractéristiques de base pour constituer un ensemble esthétique sur la surface.

3. Pièce solide gravée selon l'une quelconque des revendications 1 et 2, la pièce solide gravée :
- ayant une symétrie cylindrique, et
- étant configurée comme outil pour un transfert des caractéristiques modulées et/ou des caractéristiques de base dans un substrat,
le transfert étant l'une quelconque des actions suivantes :
le formage, l'impression, le moulage, le façonnage, le pressage et le gaufrage sur ou dans le substrat, des caractéristiques modulées et/ou des caractéristiques de base.

4. Pièce solide gravée selon l'une quelconque des revendications 1 et 2, la pièce solide gravée étant
- configurée pour être utilisée comme outil de mise en forme, pour un transfert des caractéristiques modulées et/ou des caractéristiques de base dans un substrat,
le transfert étant l'une quelconque des actions suivantes :
l'impression, le moulage, le façonnage, le pressage et le gaufrage sur le substrat, des caractéristiques modulées gravées et/ou des caractéristiques de base gravées.

5. Pièce solide gravée selon la revendication 2,
comprenant en outre une pluralité de premières cartes ordonnées et de deuxièmes cartes,
la pluralité de premières cartes ordonnées et de deuxièmes cartes étant agencée le long d'au moins une grille régulière.

6. Pièce solide gravée selon la revendication 2,
comprenant en outre une pluralité de premières cartes ordonnées et de deuxièmes cartes,
la pluralité de premières cartes ordonnées et de deuxièmes cartes étant agencée le long d'au moins une grille aléatoire.

7. Pièce solide gravée selon la revendication 2,
comprenant en outre une pluralité de premières cartes ordonnées et de deuxièmes cartes, la pluralité de premières cartes ordonnées et de deuxièmes cartes étant
- configurée pour porter des premières parties de données et constituer au moins un ensemble esthétique ; et
- agencée de façon à ce que les positions des caractéristiques modulées des premières parties de données portées soient imperceptibles à l'œil humain, mais peuvent être extraites uniquement au moyen d'une combinaison de capteur/processeur d'image commandée par logiciel.

8. Pièce solide gravée selon la revendication 1, portant en outre une troisième partie de données sur la surface correspondant à une troisième carte,
la troisième carte étant un troisième ensemble fini de positions des caractéristiques modulées sur la surface, la troisième carte étant configurée pour définir une troisième structure de bloc qui ne chevauche pas la première structure de bloc définie par la première carte, et présente l'une quelconque des propriétés suivantes
- adjacente à la première structure de bloc ;
- séparée de la première structure de bloc par une distance déterminée ; ou
- dans le cas où il existe plusieurs troisièmes cartes, séparées les unes des autres et de la première structure de bloc.

9. Procédé de fabrication (MM) d'une pièce solide gravée (SP) configurée pour porter des données (DA) comprenant des informations spécifiques, sur une surface de la pièce solide gravée, le procédé comprenant
la gravure (S1) sur la surface d'une pluralité de structures de bloc (BS), comprenant au moins une première structure de bloc,
- chaque structure de bloc étant une collection spatialement restreinte de caractéristiques modulées et de caractéristiques de base, qui sont réparties sur la surface de la pièce solide gravée,
- chaque caractéristique modulée et chaque caractéristique de base ayant respectivement un profil tridimensionnel de caractéristique modulée et un profil tridimensionnel de caractéristique de base,
- chacun des profils de caractéristique modulée étant le résultat de l'application d'une modulation correspondante à un des profils tridimensionnels de caractéristique de base, selon les informations spécifiques,
- chaque caractéristique modulée étant en outre un symbole, qui est une transcription d'un caractère d'un alphabet,
- l'alphabet étant un ensemble de caractères, qui sont des objets distincts d'une donnée élémentaire bien définie,
- chacune des caractéristiques de base étant un élément topographique tridimensionnel élémentaire gravé de la surface,
- chacune des caractéristiques modulées étant un élément topographique tridimensionnel gravé de la surface,
- au moins une partie des données (DA) étant transcrite par une structure de bloc de code de caractéristiques modulées, la structure de bloc de code constituant ainsi au moins une partie d'une structure de bloc correspondant à l'au moins une partie des données (DA),
les caractéristiques modulées de la première structure de bloc (BS) étant agencées selon une première carte ordonnée, la première carte ordonnée comprenant au moins un premier ensemble ordonné fini de premières positions des caractéristiques modulées d'une première structure de bloc de code sur la surface, la première structure de bloc correspondant à une première partie des données, et la première carte ordonnée étant en outre configurée pour agencer les caractéristiques modulées de la première structure de bloc (BS) pour constituer un ensemble esthétique sur la surface et rendre imperceptibles à l'œil humain les symboles respectifs correspondant aux caractéristiques modulées de la première structure de bloc de code, mais pouvant être extraits au moyen d'une combinaison de capteur/processeur d'image commandée par logiciel.

10. Procédé de fabrication selon la revendication 9, l'étape de gravure (S1) sur la surface d'une pluralité de structures de bloc étant exécutée au moyen de l'une quelconque des actions suivantes :
- le fraisage de précision,
- l'ablation laser,
- la gravure chimique,
- la gravure plasma et
- l'estampage.

11. Procédé selon la revendication 9, comprenant en outre la configuration (MC) de la pluralité de structures de bloc de caractéristiques modulées et de caractéristiques de base destinées à être gravées (S1) sur la surface de la pièce solide,
le procédé comprenant :
- la création (S2) de chacun des profils de caractéristiques modulées (MFP) par application, au moyen d'un profil de caractéristique de modulateur, d'une modulation correspondante à un des profils de caractéristiques de bases, selon un symbole, qui est une transcription d'un caractère d'un alphabet (AB), l'alphabet étant une collection de caractères, qui sont des objets distincts de données élémentaires bien définies,
- la transcription (S3) d'au moins une première partie des données (DA) pour une première structure de bloc de code (CC), au moyen des profils de caractéristique modulée,
- l'agencement (S4) des caractéristiques modulées correspondant à la première structure de bloc de code (CC) dans au moins une première structure de bloc de la pluralité de structures de bloc, selon une première carte ordonnée (FP), la première carte ordonnée étant un premier ensemble fini de positions des caractéristiques modulées de la première structure de bloc de code, et
- la configuration (S5) des caractéristiques modulées dans la première carte ordonnée pour constituer un ensemble esthétique sur la surface et rendre imperceptibles à l'œil humain (IHE), pour la gravure prévue, les symboles respectifs correspondant aux caractéristiques modulées de la première structure de bloc de code, mais pouvant être extraits uniquement au moyen d'une combinaison de capteur/processeur d'image commandée par logiciel.
